# EUROPÄISCHE PATENTSCHRIFT

(11) **EP 1 935 684 B1**
(45) Veröffentlichungstag und Bekanntmachung des Hinweises auf die Patenterteilung: **04.05.2016**
(21) Anmeldenummer: 06291904.8
(22) Anmeldetag: 11.12.2006
(51) Int. Cl.: F24H 9/18, H05B 3/06, B60H 1/22, H01C 7/02, H05B 3/50, F24H 3/04

(54) **Elektrischer Heizer oder Zuheizer, insbesondere für eine Heizungs- oder Klimaanlage eines Kraftfahrzeugs**
Electric heater or auxiliary heater, in particular for a heating or air conditioning system of a motor vehicle
Chauffage électrique ou chauffage, en particulier pour un climatiseur ou une installation de chauffage d'un véhicule automobile

(43) Veröffentlichungstag der Anmeldung: 25.06.2008
(73) Patentinhaber: MAHLE Behr GmbH & Co. KG, 70469 Stuttgart (DE); Mahle Behr France Rouffach S.A.S, 68250 Rouffach (FR)
(72) Erfinder: Frank, Ingo, 71334 Waiblingen (DE); Gogmos, Erwan, 92800 Puteaux (FR); Gross, Dieter, 70195 Stuttgart (DE); Kohl, Michael, 74321 Bietigheim-Bissingen (DE); Otto, Jürgen, 71723 Grossbottwar (DE)
(74) Vertreter: Grauel, Andreas

(56) Entgegenhaltungen:
- EP-A2- 0 893 937
- EP-A2- 1 340 638
- DE-A1- 19 724 734
- DE-A1- 19 804 496
- DE-A1-102004 027 687
- DE-A1-102004 045 668
- DE-U1- 29 719 639

## Beschreibung

Die Erfindung betrifft einen elektrischen Heizer oder Zuheizer, insbesondere für eine Heizungs- oder Klimaanlage eines Kraftfahrzeugs, gemäß dem Oberbegriff des Anspruches 1.

Bei Niederverbrauchsfahrzeugen ist auf Grund des geringen Abwärmeangebots eine zusätzliche Heizleistung zur Erwärmung des Fahrgastraums sowie zur schnellen Beseitigung eines Beschlags (Eis oder Wasser) insbesondere an der Windschutzscheibe erforderlich. Hierfür Ist bekannt, bei Wärmetauschem, die aus Flachrohren aufgebaut sind, durch welche ein Wärmeübertragungsmedium strömt, welches im Heizungsfall Wärme abgibt, zumindest an den äußersten Rohren eine Zusatzheizung in Form von PTC-Heizelementen vorzusehen, wobei es sich in der Regel um Keramik-PTC-Bausteine handelt, bei denen sich üblicherweise eine Oberflächentemperatur von zwischen 110 und 160°C einstellt, unabhängig von den Randbedingungen, wie angelegte Spannung, Nominalwiderstand, Luftströmung. Auf Grund von Beschränkungen in der Formgebung und Geometrie ist die Anbringung oder die Konstruktion eines elektrischen Zuheizers recht aufwendig. Zudem sind die Keramik-PTC-Bausteine relativ schwer.

Herkömmliche PTC-Heizkörper aus Keramik, die einen sehr eingeschränkten Freiheitsgrad bei der Auswahl einer Gestaltungsform bieten, verwenden auf Grund dieser Gestaltungsprobleme ein Rippenelement zur Verbesserung der Wärmestrahleigenschaften. Ein derartiger Heizkörper ist beispielsweise aus der JP-B2-3274234 bekannt. Hierbei ist eine Wellrippe mit der Heizvorrichtung des PTC-Heizkörpers durch eine Metallplatte kombiniert, und ein Wärmeaustausch zwischen dem PTC-Heizkörper und Luft wird durch diese Wellrippe durchgeführt. Die erzeugte Wärme des PTC-Heizkörpers wird durch die Metallplatte thermisch zu der Wellrippe geleitet und von der Wellrippe an die Luft abgestrahlt. Nachteilig hierbei ist, dass die Temperatur der Wellrippe, die in Kontakt mit der Luftströmung ist, deutlich geringer als die Temperatur des PTC-Heizkörpers ist.

Aus diesem Grund wird der direkte Wärmeübergang vom PTC-Heizkörper auf den Luftstrom bevorzugt. So ist aus der DE 10 2004 027 687 A1 eine elektrische Heizvorrichtung mit mehreren Heizkörperplatten, die parallel zueinander angeordnet sind, um einen Luftkanal zwischen zwei benachbarten Heizkörperplatten zu definieren, ein mit einer Stirnseite jeder Heizkörperplatte verbundenes positives Elektrodenelement und ein mit der anderen Stirnseite jeder Heizkörperplatte verbundenes negatives Elektrodenelement bekannt. Bei den Heizkörperplatten handelt es sich beispielsweise um ein elektrisch leitfähiges Harz, in welches ein elektrisch leitfähiges Füllmaterial gemischt ist. Dabei besitzt das elektrisch leitfähige Harz im Allgemeinen eine positive Widerstands-Temperatur-Kennlinie, bei welcher der elektrische Widerstand bei einer vorbestimmten Temperatur oder höher steigt. Der Strom fließt hierbei von einem Elektrodenelement durch die Heizkörperplatten zum anderen Elektrodenelement. Somit entfallen die Wellrippen bei diesem direkten Wärmeübergang.

Ferner sind Ausgestaltungen mit Kunststoff-PTC-Elementen bekannt, die mittels hieran, bspw. mittels Kleben angebrachter, der elektrischen Kontaktierung dienender Kontaktbleche verbunden sind, wobei die Kunststoff-PTC-Elemente selbst direkt das Heizgitter bilden. Beispielsweise zeigt die DE 10 2004 045 668 A1 derartige elektrisch beheizbare Kunststoffmatrizen, die beispielsweise eine Wabenstruktur oder eine luftdurchströmbare Schaumstruktur aufweisen können. Für eine verbesserte Ein- und Ableitung des Stromes können Kontaktmittel vorgesehen sein, beispielsweise in Form von Kämmen mit Zinken, die in Kanäle der Wabenstruktur eingeführt sind, mittels auf die Kontaktflächen geklebter Metallfolien oder mittels aufgebrachter Metallschichten. Die Aufbringung der Metallschichten kann beispielsweise mittels Sputtern, des PVC-Verfahrens, Lichtbogenverdampfung oder Galvanisieren erfolgen.

Die US 5,206,476 A offenbart eine PTC-Heizereinheit, die im Bereich der Ausströmer angeordnet ist, wobei die PTC-Heizereinheit durch ein Polymermaterial mit PTC-Eigenschaften gebildet ist, welches mehrere rechteckförmig ausgebildete und in einer Reihe angeordnete Luftkanäle aufweist, die von Luft durchströmt werden. Auf der Ober- und Unterseite des PTC-Elements sind Kontaktbleche für die elektrische Kontaktierung vorgesehen, so dass der Stromfluss von dem oberen Kontaktblech über die Oberseite des PTC-Elements durch die einzelnen Stege zur Unterseite des PTC-Elements und anschließend zum unteren Kontaktblech oder anders herum erfolgt. Eine derartige Heizereinheit lässt noch Wünsche offen.

Auch ist die DE 198 04 496 A1 bekannt geworden, die ebenso ein elektrisches Widerstandsheizelement offenbart.

Ausgehend von diesem Stand der Technik ist es Aufgabe der Erfindung, einen verbesserten elektrischen Heizer oder Zuheizer zur Verfügung zu stellen. Diese Aufgabe wird gelöst durch einen elektrischen Heizer oder Zuheizer, insbesondere für eine Heizungs- oder Klimaanlage eines Kraftfahrzeugs, mit den Merkmalen des Anspruchs 1. Vorteilhafte Ausgestaltungen sind Gegenstand der Unteransprüche.

Erfindungsgemäß ist ein elektrischer Heizer oder Zuheizer, insbesondere für eine Heizungs- oder Klimaanlage eines Kraftfahrzeugs, vorgesehen, mit mindestens einem durch ein PTC-Element gebildeten Heizelement, welches der Erwärmung eines durch mindestens einen im Heizelement ausgebildeten Luftkanal strömenden Mediums dient, und das PTC-Element zur Stromein- bzw. -ausleitung an zwei einander gegenüberliegenden Randbereichen, die senkrecht oder im Wesentlichen senkrecht zur Strömungsrichtung des Mediums angeordnet sind, über Kontaktbleche elektrisch kontaktiert ist, wobei das Heizelement zwischen zwei Kontaktblechen angeordnet ist, wobei am Kontaktblech Mittel zum Halten des Heizelements und/oder am Heizelement Mittel zum Halten des Kontaktblechs ausgebildet sind. Das oder die Mittel wirken vorzugsweise mittels Kraft- und/oder Formschluss. Beim Medium handelt es sich in der Regel um Luft, jedoch kann es sich beim Medium auch um ein beliebiges anderes Medium handeln, insbesondere auch eine Flüssigkeit, wie insbesondere Öl, wobei gegebenenfalls entsprechenden Eigenschaften und geeigneten Maßnahmen zur Vermeidung eines Stromflusses durch das Medium vorzusehen sind. Der Einfachheit wird jedoch auf das Medium nur als Luft Bezug genommen.

Die Mittel zum Halten des Heizelements werden erfindungsgemäß durch federnde Zungen gebildet, die auf mindestens einer Seite an einem durch eine Öffnung im Kontaktblech ragenden, äußeren Steg des Heizelements anliegen. Insbesondere bevorzugt sind beidseitig der Öffnung federnde Zungen ausgebildet. Eine besonders einfache elektrische Kontaktierung zwischen Heizelement und Kontaktblech ist dadurch möglich, dass im Kontaktblech Schlitze ausgebildet sind, in welche verlängert ausgebildete äußere Stege bzw. die äußeren Enden von Abstandshaltern eingeführt und hierin fixiert werden. Dabei können die Schlitze doppel-T-förmig ausgebildet sein, so dass auf beiden Seiten in Tiefenrichtung des Heizelements Zungen vorgesehen sind, welche federnd an die Seitenflächen der Stege oder Abstandshalter anliegen und dieselben so halten. Bei einer versetzten Anordnung der verlängert ausgebildeten Stege oder Abstandshalter können auch von beiden Seiten des Kontaktblechs Heizelemente an demselben angebracht werden, so dass ein sehr einfacher und kompakter Aufbau eines Heizers oder Zuheizers, bspw. für zwei Heizzonen möglich ist. Eine Sicherung der Verbindung kann durch das Vorsehen eines vorstehenden oder überstehenden Bereichs am Stegende vorgesehen sein, wobei das Zungenende an der inneren Kante zwischen Seitenfläche Steg und vor- bzw. überstehendem Bereich anliegt.

In Verbindung hiermit oder in Alleinstellung können als Mittel zum Halten des Heizelements durch an dem Kontaktblech ausgebildete Klammern gebildet sein, die seitlich des Heizelements, also auf den Seiten in Breiten- und/oder Tiefenrichtung, enden. Insbesondere bevorzugt enden die Klammern an den nicht luftdurchströmten Seitenflächen des Heizelements. Die Klammern bringen bevorzugt eine Spannkraft auf, welche die beiden Bauteile aneinander hält.

Die am Kontaktblech ausgebildeten Klammern hintergreifen vorzugsweise das Heizelement in mindestens einem Bereich. Dabei sind die Klammern vorzugsweise in Art eines Federarms mit Vorsprung ausgebildet, so dass Heizelement und Klammern mittels Clipsverbindungen bevorzugt lösbar miteinander verbunden sind.

Für die Verbindung von Heizelement und Kontaktblech ist vorzugsweise im Heizelement mindestens eine Öffnung oder Vertiefung für einen Eingriff einer Klammer ausgebildet und/oder am Heizelement mindestens ein Vorsprung zum Hintergreifen mit mindestens einer Klammer vorgesehen.

Sind einzelne Öffnungen oder Vertiefungen für die Klammern vorgesehen, so können dieselben an die Breite der Klammern angepasst sein, so dass zusätzliche Maßnahmen zum Verhindern eines Verschiebens der Bauteile gegeneinander senkrecht zur Eingriffsrichtung der Klammer entfallen können.

Ist ein Vorsprung, insbesondere ein über die Tiefe des Heizelements durchgehender Vorsprung vorgesehen, so ist dieser besonders bevorzugt nasenartig ausgebildet, wobei die schräg verlaufende Seite eine Einführschräge bildet und das Zusammenbauen erleichtert. Fehlen am Vorsprung seitliche Anschläge für die Klammern, so sind vorzugsweise auch Klammern zur Sicherung gegen ein Verschieben der Bauteile in die andere Richtung vorgesehen, d.h. in diesem Fall sind bevorzugt Klammern sowohl in Breiten- als auch in Tiefenrichtung des Heizelements vorgesehen, welche das Heizelement in Breiten- und/oder Tiefenrichtung des Heizelements am Kontaktblech positionieren und zentrieren.

Die Klammern, welche die Mittel zum Halten des Heizelements bilden, sind bevorzugt bügelartig aus überstehenden Streifen des Kontaktblechs gebogen.

Die Kontaktbleche weisen vorzugsweise eine Dicke von 0,3 bis 3,0 mm, insbesondere 0,5 bis 2,0 mm auf.

Die Kontaktbleche bestehen bevorzugt aus Aluminium, Kupfer, einer Kupfer-Zink-Legierung, ggf. mit Silizium, oder Stahl, insbesondere Federstahl. Es sind jedoch auch andere elektrisch leitfähige Materialien möglich. Hierbei sind die Kontaktbleche bevorzugt federnd ausgebildet, so dass eine Volumenänderung des Heizelements ausgeglichen werden kann, wobei der Anpressdruck der Kontaktbleche im Wesentlichen bei allen Betriebsbedingungen unverändert ist und dadurch das Heizelement, das zwischen den Kontaktblechen angeordnet ist, sicher und verlässlich gehalten und elektrisch kontaktiert werden kann. Bei den Kontaktblechen handelt es sich bevorzugt um Stanzbiegeteile.

Bei dem erfindungsgemäßen Heizer oder Zuheizer begrenzt bevorzugt zumindest ein direkt benachbarter Bereich von der das Heizelement kontaktierenden Fläche des Kontaktblechs sowie zumindest ein direkt benachbarter Bereich von der das Kontaktblech kontaktierenden Fläche des Heizelements einen äußeren Luftkanal, der durch das Heizelement und das Kontaktblech gebildet ist, und ferner ist bevorzugt eine Mehrzahl von Stromein- bzw. -ausleitbereichen zum Kontaktblech vorgesehen, die jeweils durch besagte äußere Luftkanäle voneinander getrennt sind. Durch das Vorsehen äußerer Luftkanäle wird der elektrische Kontaktbereich gekühlt, so dass die Leistungsdichte des Heizelements erhöht werden kann. In Folge der guten Wärmeleitfähigkeit der Kontaktbleche kann die im elektrischen Kontaktbereich erzeugte Wärme schnell abgeführt und an die am Kontaktblech vorbei durch die äußeren Luftkanäle strömende Luft abgegeben werden. Ein Abregeln des Heizelements in Folge einer zu hohen Temperatur im Randbereich kann vermieden werden. Bei Bedarf kann die Luft gezielt in die äußeren Luftkanäle geleitet werden, um den Randbereich verstärkt zu kühlen und dadurch die Gesamtleistung des Heizelements zu erhöhen.

Besonders bevorzugt ist beim Heizelement ein Verbindungsbereich vorgesehen, der beabstandet von den elektrisch kontaktieren Randbereichen ausgebildet ist. Die voneinander beabstandeten, äußeren Enden außenseitig angeordneter, äußerer Stege dienen insbesondere der Stromeinleitung in bzw. der Stromausleitung aus dem Heizelement, d.h. es erfolgt keine großflächige Stromein- oder -ausleitung in das bzw. aus dem PTC-Element über die gesamte (geschlossene) Seitenfläche. Der Verbindungsbereich sorgt für eine gleichmäßige Stromverteilung auf die inneren Stege des Heizelements. Dabei bildet der Verbindungsbereich bevorzugt einen Teil der Begrenzung des äußeren Luftkanals. Bei einer entsprechenden Ausgestaltung der äußeren Stege können jedoch auch dieselben den äußeren Luftkanal begrenzen. In Folge der äußeren Stege ist der Stromübergangsbereich (Kontaktblech o.ä. und PTC-Element) von Luft oder ggf. einem anderen geeigneten Medium umströmt, so dass das PTC-Element in diesem Bereich nicht abregelt und die Stromversorgung des inneren Bereichs und damit die Heizleistung sichergestellt werden kann.

Dadurch, dass das Heizelement direkt im Luftstrom angeordnet ist, kann eine hohe Leistungsdichte in Verbindung mit einer homogenen Temperaturvertellung über die gesamte wärmeübertragende Fläche des Heizelements erzielt werden. Ferner wird der Druckabfall, da keine zusätzlichen Wärmeübertragungselemente, wie Wellrippen o.ä., im Luftstrom vorgesehen sein müssen (aber ggf. können), nicht unnötig erhöht.

Das Heizelement weist vorzugsweise mindestens drei Reihen, insbesondere bevorzugt genau drei Reihen, von Stegen auf, welche durch Verbindungsbereiche voneinander getrennt sind.

Die Breite der Stege beträgt vorzugsweise 0,5 bis 3,0 mm, insbesondere bevorzugt 1 bis 2,5 mm. Insbesondere bevorzugt entsprechen sich die Stegbreiten der inneren und äußeren Stege.

Die Breite des Verbindungsbereichs beträgt vorzugsweise 0,5 bis 3,0 mm, insbesondere bevorzugt 1 bis 2,5 mm. Besonders bevorzugt entspricht die Breite der Verbindungsbereiche der Breite der Stege.

Insbesondere bevorzugt entspricht in mindestens einer Schnittebene senkrecht zur normalen Luftströmungsrichtung die Breite eines Verbindungsbereichs der Breite eines Stegs.

Die Breite der zwischen den Stegen ausgebildeten Luftkanäle beträgt vorzugsweise 1 bis 10 mm, insbesondere bevorzugt 2 bis 8 mm.

Das Heizelement weist bevorzugt mindestens drei Reihen, besonders bevorzugt genau drei Reihen von Stegen auf, welche durch Verbindungsbereiche voneinander getrennt sind.

Besonders bevorzugt ist der Verbindungsbereich zumindest in einer Schnittebene als eine über die gesamte Breite des Heizelements sich erstreckende Fläche ausgebildet, und insbesondere bevorzugt sind zwei parallel zueinander verlaufende, über die gesamte Breite des Heizelements ebene Verbindungsbereiche vorgesehen.

Der Verbindungsbereich kann zumindest zwischen zwei benachbarten Stegen in einer Schräge zu den benachbart den Kontaktblechen angeordneten Außenseiten des Heizelements ausgebildet sein. Dies ermöglicht eine Veränderung der Luftströmungsrichtung und beeinflusst somit die Strömungsrichtung der aus dem Heizer oder Zuheizer ausströmenden Luft. Bei entsprechender Ausgestaltung lässt sich beispielsweise eine gerichtete oder eine diffuse Luftströmung erreichen.

Vorzugsweise verläuft zumindest ein Teil der Stege parallel zueinander. Ebenso kann - auch oder ausschließlich - zumindest ein Teil der Stege fächerartig oder auf andere Weise in einem Winkel ungleich 180° zueinander angeordnet sein, so dass der Luftstrom aufgefächert oder zusammengeführt wird. Dabei kann das Auffächern bzw. Zusammenführen in Höhen- und/oder Breitenrichtung des Heizelements erfolgen.

Um die Durchmischung der Luft zu verbessern, ist vorzugsweise zumindest ein Teil der Stege, insbesondere der inneren Stege, derart ausgebildet, dass diese Stege sich nur über einen Teil der Gesamttiefe des Heizelements erstrecken.

Insbesondere bevorzugt sind zumindest die äußeren Stege in Tiefenrichtung durchgehend ausgebildet, d.h. die äußeren Luftkanäle verlaufen vorzugsweise über die gesamte Tiefenrichtung des Heizelements.

Besonders bevorzugt sind die äußeren Stege kürzer als die inneren Stege ausgebildet. Insbesondere bevorzugt sind die inneren Stege mindestens doppelt, insbesondere bevorzugt mindestens dreimal oder viermal so lang wie einer der äußeren Stege ausgebildet.

Bevorzugt ist der Verbindungsbereich zick-zack-förmig oder wellenförmig ausgebildet, wobei auf jedem Berg oder unter jedem Tal jeweils ein Steg vorgesehen ist. Durch eine derartige Ausgestaltung verkürzt sich der Weg des Stromes durch das Heizelement etwas. Ferner ergibt sich eine gleichmäßigere Stromverteilung über den Gesamtbereich des Heizelements. Die Breite des Verbindungsbereichs beträgt im Falle einer derartigen Ausgestaltung des Verbindungsbereichs vorzugsweise 40% bis 60%, insbesondere bevorzugt 50%, der Breite eines Stegs.

Besonders bevorzugt sind mindestens zwei Heizelemente vorgesehen, wobei zwischen den Heizelementen ein Kontaktblech angeordnet ist. Ferner sind auf beiden Seiten des Kontaktblechs äußere Luftkanäle, getrennt voneinander durch Stege, vorgesehen. Dies ermöglicht eine ausreichende Kühlung des zentralen Kontaktblechs, trotz der auf beiden Seiten desselben durch die Heizelemente erzeugte Wärme. Zumindest das zentrale Kontaktblech ist derart ausgebildet, dass es von beiden Seiten her Heizelemente halten kann, d.h. es weist in beiden Richtungen Mittel zum Halten jeweils mindestens eines Heizelements auf. Bei entsprechender Ausgestaltung und hiermit verbundener elektrischer Kontaktierung lassen sich beliebig große Anordnungen von Heizelementen bilden. Ferner ist eine Art Baukastensystem möglich. Hierbei kann ein zentrales Kontaktblech auch lediglich der Stromweiterleitung (innere Stromein- oder -ausleitung) an das benachbarte Heizelement dienen, d.h. nicht notwendigerweise jedes Kontaktblech dient der Stromein- oder -ausleitung von bzw. nach außen. Hierbei ist dieses Kontaktblech in Folge der Luftumströmung gut gekühlt, so dass eine Abregelung des Heizers oder Zuheizers auf Grund zu hoher Temperaturen in diesem kritischen Bereich vermieden werden können. Zudem erhöht das zentrale Kontaktblech die wärmeübertragende Fläche.

Das oder die Mittel zum Halten des Heizelements und/oder das oder die Mittel zum Halten des Kontaktblechs weisen bevorzugt einen elastisch verformbaren Bereich auf, welcher während des Zusammenbaus von Heizelement und Kontaktblech kurzfristig elastisch verformt wird, bevor er seine Endposition erreicht, in welcher er einen Bereich des Bauteils hintergreift. Die Endposition entspricht hierbei vorzugsweise der nicht ausgelenkten Ausgangsstellung oder einer Stellung nahe der Ausgangsstellung. Zur Sicherung der Anlage ist eine leichte Vorspannung bevorzugt.

Gemäß einer bevorzugten Ausführungsform ist der elastische Bereich am Heizelement ausgebildet. Hierfür sind am Heizelement Federarme oder andere elastisch oder im Wesentlichen elastisch verformbare Bereiche vorgesehen, welche außenseitig wenigstens einen Vorsprung aufweisen, welcher im zusammengebauten Zustand einen Bereich eines Kontaktblechs hintergreift und dadurch das Kontaktblech am Heizelement hält. Das Kontaktblech weist hierfür bevorzugt Öffnungen auf, bspw. Langlöcher, rechteckförmige Öffnungen oder Bohrungen, durch welche die Federarme ragen. Insbesondere bevorzugt sind jeweils zwei Federarme vorgesehen, deren Vorsprünge sich in entgegengesetzter Richtung erstrecken und die an einander gegenüberliegenden Seiten der Öffnung anliegen, so dass zusätzlich eine definierte Positionierung der Bauteile zueinander erfolgt.

Natürlich ist auch die umgekehrte Ausgestaltung möglich, d.h. die Federarme sind am Kontaktblech ausgebildet und hintergreifen mit Vorsprüngen einen Bereich des Heizelements.

Zur Erhöhung der Leistungsdichte können die Stege und/oder die Verbindungsbereiche eine die Oberfläche vergrößernde Struktur aufweisen. Diese Struktur kann bspw. durch eine Mehrzahl von Nuten beliebiger Gestalt, Noppen oder Rippen gebildet sein.

Die PTC-Elemente werden bevorzugt durch Kunststoff-Elemente mit PTC-Eigenschaften gebildet, welche einfacher und flexibler herstellbar sind als bekannte Kerarnik-PTC-Elemente. Das PTC-Element, insbesondere im Falle eines Kunststoff-PTC-Elements, kann gespritzt, extrudiert, gesintert oder auf sonstige geeignete Weise hergestellt sein. Das Heizelement besteht bevorzugt aus einem Polymer, insbesondere bevorzugt einem Polyolefin, mit elektrisch leitenden Füllmaterialien, insbesondere mit Kohlenstoff, insbesondere in Form von Rußpartikeln. Andere geeignete Materialien können jedoch auch verwendet werden.

Vorzugsweise ist das Kunststoff-PTC-Element bereichsweise, d.h. vorliegend im Bereich der Enden der äußeren Stege, mit mindestens einer elektrisch leitenden Oberflächenbeschichtung, im Folgenden als Beschichtung bezeichnet, versehen. Das Vorsehen einer elektrisch leitenden Beschichtung verringert den Oberflächenwiderstand und somit den Übergangswiderstand, wobei auch eine direkte elektrische Anbindung von elektrisch leitenden Partikeln im PTC-Element erfolgt, und vereinfacht somit die Stromzuführung und/oder -ableitung, so dass eine großflächige Kontaktierung entfallen kann, wodurch sich die Herstellungskosten und auch das Gewicht des Zuheizers verringern. Bevorzugt sind die PTC-Elemente mit zwei räumlich durch das PTC-Element voneinander getrennten elektrisch leitenden Beschichtungen versehen. Hierbei sind die Beschichtungen so angeordnet, dass das PTC-Element möglichst großflächig durchströmt und dadurch entsprechend erwärmt wird. Um eine ungleichmäßige Erwärmung zu verhindern, ist die Dicke und somit der Abstand der beiden Beschichtungen des PTC-Elements entsprechend möglichst gleichbleibend ausgebildet. Der Stromfluss erfolgt vorzugsweise entlang des kürzesten Weges durch das PTC-Element. Neben einer Verbesserung des Stromübergangs hat eine entsprechende Beschichtung auch eine Verbesserung des Wärmeübergangs zur Folge. Die Beschichtung wird vorzugsweise durch Silber, Aluminium, Kupfer oder Gold sowie entsprechende Legierungen gebildet, andere gut stromleitende Materialien sind ebenfalls möglich. Die Beschichtung kann auch mehrschichtig ausgebildet sein, bspw. durch eine auf Kunststoff aufgebrachte Kupferschicht.

Die Beschichtung kann vorzugsweise mittels Bedampfen (z.B. PVC-Verfahren, CVD-Verfahren), Plattierens, galvanischen Abscheidens und/oder thermischen Spritzens erfolgen. Andere Verfahren sind ebenfalls möglich. Ebenso kann eine elektrisch leitende Folie aufgeklebt werden, wobei die Folie auch selbstklebend ausgeführt sein kann.

Aus Gründen der Kurzschluss-Sicherheit im Kraftfahrzeug sind bevorzugt die außen angeordneten Kontaktbleche mit dem Minus-Pol und/oder die inneren Kontaktbleche mit dem Plus-Pol verbunden.

Ein oder mehrere derartige elektrische Heizer oder Zuheizer werden vorzugsweise in einer Kraftfahrzeug-Heiz- oder -Klimaanlage verwendet. Dabei kann eine entsprechende Anordnung von PTC-Elementen sowohl im Bereich des Heizers, d.h. insbesondere im Gehäuse einer Klimaanlage, als Zuheizer als auch im Bereich der Luftkanäle kurz vor den Ausströmern verwendet werden, wo die PTC-Elemente bei Bedarf "vor Ort" zusätzliche Wärme erzeugen.

Im Folgenden wird die Erfindung anhand mehrerer Ausführungsbeispiele unter Bezugnahme auf die Zeichnung im Einzelnen erläutert. Es zeigen:

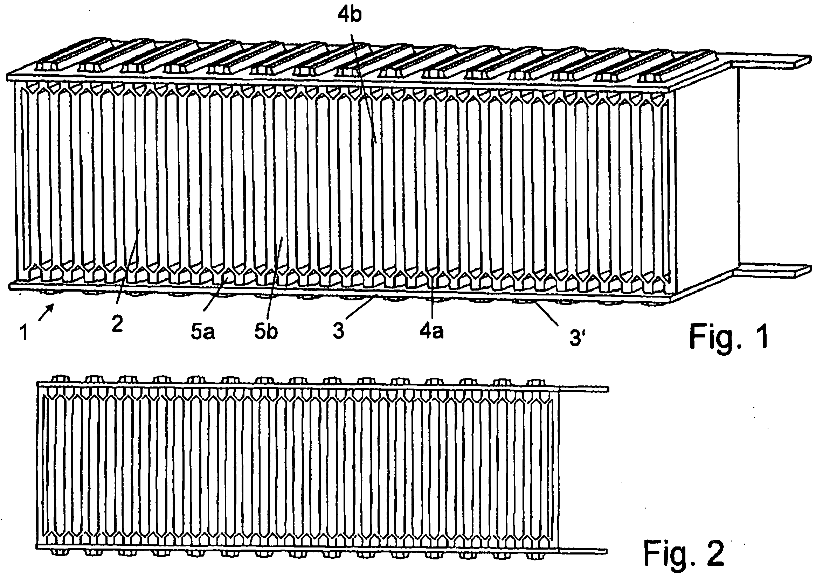

- Fig. 1: eine perspektivische Ansicht eines elektrischen Zuheizers gemäß dem ersten Ausführungsbeispiel,
- Fig. 2: eine Seitenansicht des Zuheizers von Fig. 1,
- Fig. 3: eine ausschnittsweise, vergrößerte, perspektivische Darstellung des elektrischen Zuheizers von Fig. 1,

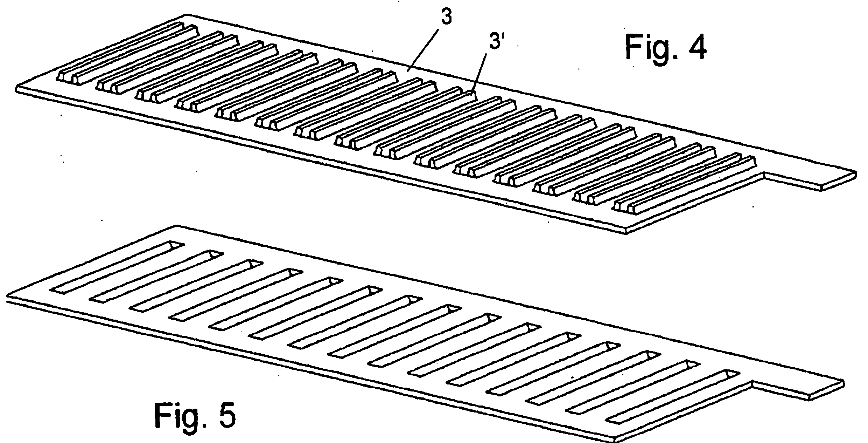

- Fig. 4: eine perspektivische Ansicht des Kontaktblechs von Fig. 1,
- Fig. 5: eine andere perspektivische Ansicht des Kontaktblechs von Fig. 1,

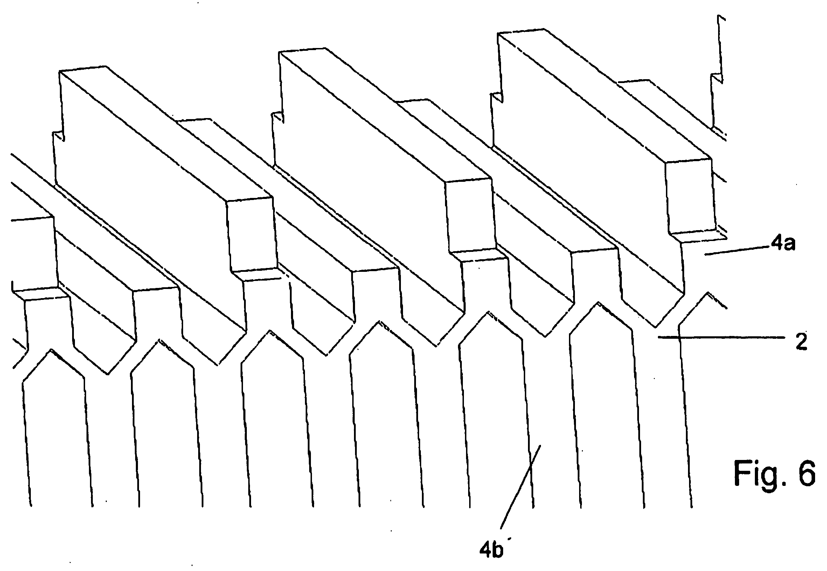

- Fig. 6: eine perspektivische, ausschnittsweise Darstellung des Heizelements von Fig. 1,
- Fig. 7: eine perspektivische Darstellung eines elektrischen Zuheizers gemäß dem zweiten Ausführungsbeispiel,
- Fig. 8: eine perspektivische Darstellung eines elektrischen Zuheizers gemäß einer Variante des zweiten Ausführungsbeispiels,

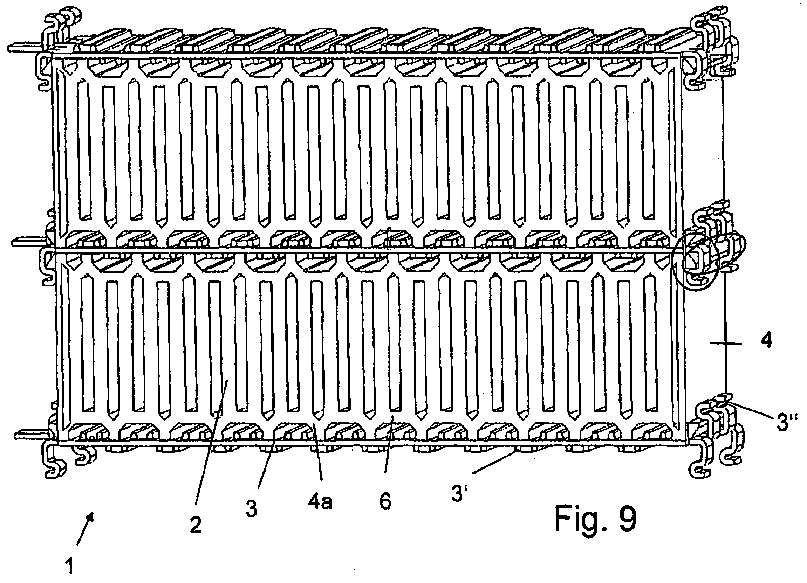

- Fig. 9: eine perspektivische Darstellung eines elektrischen Zuheizers gemäß einer zweiten Variante des zweiten Ausführungsbeispiels,
- Fig. 10: eine perspektivische Darstellung eines elektrischen Zuheizers gemäß einer dritten Variante des zweiten Ausführungsbeispiels,
- Fig. 11: eine vergrößerte, ausschnittsweise, perspektivische Darstellung des Zuheizers von Fig. 11,
- Fig. 12: eine perspektivische Darstellung eines elektrischen Zuheizers gemäß dem dritten Ausführungsbeispiel,
- Fig. 13: eine ausschnittsweise, vergrößerte Darstellung des Heizelements von Fig. 12,
- Fig. 14: eine perspektivische Darstellung des Kontaktblechs von Fig. 12,
- Fig. 15: eine perspektivische Darstellung eines elektrischen Zuheizers gemäß dem vierten Ausführungsbeispiel,
- Fig. 16: eine perspektivische Darstellung eines elektrischen Zuheizers gemäß dem fünften Ausführungsbeispiel,
- Fig. 17: eine vergrößerte, ausschnittsweise, perspektivische Darstellung des Zuheizers von Fig. 16,
- Fig. 18: eine perspektivische Darstellung eines elektrischen Zuheizers gemäß dem sechsten Ausführungsbeispiel,
- Fig. 19: eine vergrößerte, ausschnittsweise, perspektivische Darstellung des Zuheizers von Fig. 18,
- Fig. 20: eine Draufsicht auf den Zuheizer von Fig. 18,
- Fig. 21: eine perspektivische Darstellung eines elektrischen Zuheizers gemäß einer ersten Variante des sechsten Ausführungsbeispiels,
- Fig. 22: eine vergrößerte, ausschnittsweise, perspektivische Darstellung des Zuheizers von Fig. 21,
- Fig. 23: eine Draufsicht auf den Zuheizer von Fig. 21,

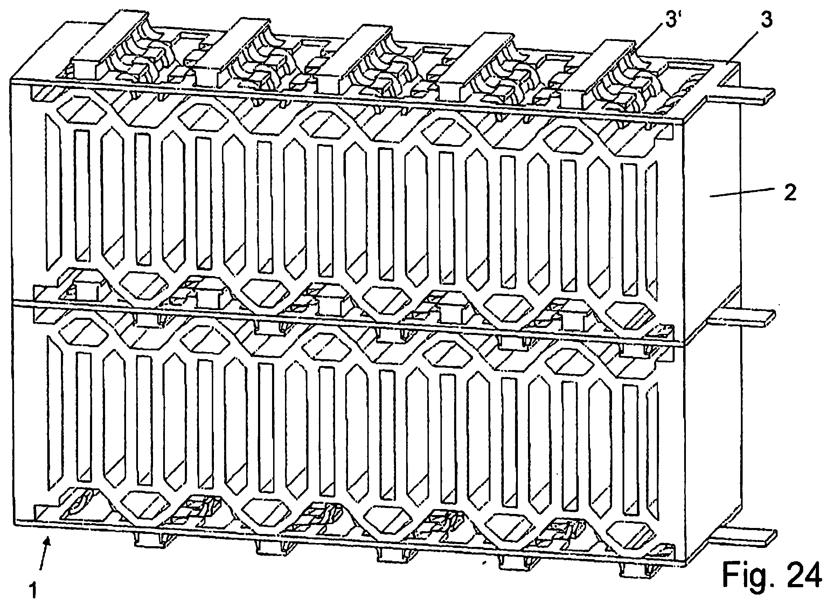

- Fig. 24: eine perspektivische Darstellung eines elektrischen Zuheizers gemäß einer zweiten Variante des sechsten Ausführungsbeispiels,
- Fig. 25: eine vergrößerte, ausschnittsweise, perspektivische Darstellung des Zuheizers von Fig. 24,
- Fig. 26: eine Draufsicht auf den Zuheizer von Fig. 24,
- Fig. 27: eine perspektivische Darstellung eines elektrischen Zuheizers gemäß dem siebten Ausführungsbeispiel,
- Fig. 28: eine Seitenansicht des Zuheizers von Fig. 27,
- Fig. 29: eine vergrößerte, ausschnittsweise, perspektivische Darstellung des Zuheizers von Fig. 27,
- Fig. 30: eine perspektivische Darstellung eines elektrischen Zuheizers gemäß dem achten Ausführungsbeispiel,
- Fig. 31: eine vergrößerte, ausschnittsweise, perspektivische Darstellung des Zuheizers von Fig. 30,
- Fig. 32: eine perspektivische Darstellung eines elektrischen Zuheizers gemäß dem neunten Ausführungsbeispiel,
- Fig. 33: eine Seitenansicht des Zuheizers von Fig. 32, und
- Fig. 34: eine vergrößerte, ausschnittsweise, perspektivische Darstellung des Zuheizers von Fig. 32.

Ein elektrischer Zuheizer 1 mit einer Bautiefe von 25 mm für eine Kraftfahrzeug-Klimaanlage (nicht dargestellt) weist gemäß dem ersten Ausführungsbeispiel ein blockartig ausgebildetes und mit einer Mehrzahl von in Luftströmungsrichtung durchgehenden, parallel zueinander verlaufender Öffnungen ausgebildetes Heizelement 2 auf, das zwischen zwei der elektrischen Kontaktierung des Heizelements dienenden Kontaktblechen 3 angeordnet ist.

Das Heizelement 2 besteht aus einem Kunststoff mit PTC-Eigenschaften, vorliegend aus einem Polyolefin mit Rußpartikeln, weshalb im Folgenden auf das Heizelement 2 auch als PTC-Element Bezug genommen wird. Das PTC-Element ist vorliegend mittels Spritzen hergestellt, alternativ sind auch andere Herstellungsverfahren, wie sie insbesondere aus der Kunststoffherstellung bekannt sind, möglich, wie bspw. Extrudieren oder Sintern. Alternativ zu einem Kunststoff-PTC-Element kann auch ein anderes geeignetes Material mit PTC-Eigenschaften verwendet werden. Bei den Kontaktblechen 3 handelt es sich um elektrisch gut leitende Metallbleche, welche mit einer Stromquelle (nicht dargestellt) verbunden sind.

Das Heizelement 2 weist vorliegend drei parallel zueinander und zu den Kontaktblechen 3 angeordnete Reihen von Stegen 4, nämlich obere und untere äußere Stege 4a und zentrale, innere Stege 4b, auf, die jeweils durch Luftkanäle 5, nämlich äußere Luftkanäle 5a zwischen den äußeren Stegen 4a und innere Luftkanäle 5b zwischen den inneren Stegen 4b, voneinander getrennt und bezüglich der benachbarten Stegreihe auf Lücke versetzt zueinander angeordnet sind. Die Breite der Stege 4 der einzelnen Reihen ist vorliegend gleich und beträgt 2 mm. Die Breite der Luftkanäle 5, die zwischen den Stegen 4 ausgebildet sind, ist etwas größer als die Breite der Stege 4 und beträgt vorliegend 2,5 mm.

Vorliegend ist jeder zweite äußere Steg 4a verlängert ausgebildet, wobei in Tiefenrichtung des Heizelements 2 gesehen im Endbereich jeweils ein kleiner Absatz vorgesehen ist, der in Höhe der kurzen äußeren Stege 4a verläuft. Die verlängert ausgebildeten Stege 4a auf beiden Seiten des Heizelements 2 fluchten vorliegend miteinander, wie auch jeweils die kurzen äußeren Stege 4a miteinander fluchten. Die Länge der kurzen äußeren Stege 4a, die dem Abstand der Kontaktbleche 3 vom Verbindungsbereich 5 entspricht, beträgt vorliegend 3 mm, die Länge der verlängerten äußeren Stege 4a beträgt vorliegend 7 mm, und die Länge der inneren Stege 4b beträgt vorliegend 30 mm.

Zwischen den äußeren und inneren Stegen 4a und 4b sind jeweils Verbindungsbereiche 6 ausgebildet, über welche eine Querverteilung des Stromflusses zwischen den Stegen 4 erfolgen kann. Die beiden Verbindungsbereiche 6 sind im Wesentlichen, d.h. im Mittel über die gesamte Breite des Heizelements 2 gesehen, parallel zueinander und zu den Kontaktblechen 3 angeordnet und weisen jeweils eine Dicke auf, welche etwa der Hälfte der Breite der Stege 4 entspricht. Die Verbindungsbereiche 6 sind jeweils näher an der Außenseite des Heizelements 2, d.h. beim entsprechenden Kontaktblech 3, als am anderen Verbindungsbereich 6 angeordnet, d.h. die äußeren Stege 4a sind kürzer als die inneren Stege 4b. Ferner verlaufen die Verbindungsbereiche 6 jeweils zick-zack-förmig mit vorliegend rechten Winkeln im Bereich zwischen der Abzweigung der inneren und der äußeren Stege 4b bzw. 4a.

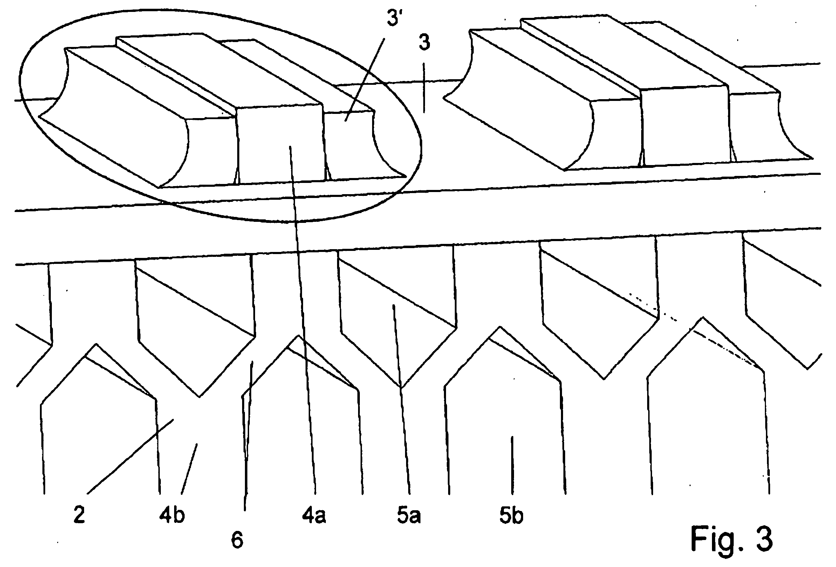

Bei den die Elektroden bildenden Kontaktblechen 3 handelt es sich vorliegend um Federstahlbleche mit einer Dicke von 0,5 mm. Wie insbesondere aus Fig. 3 ersichtlich, sind in den Kontaktblechen 3 in Tiefenrichtung des Zuheizers 1 verlaufende Schlitze ausgebildet, wobei in Folge einer doppel-T-förmigen Ausgestaltung der Schlitze zwei sich in Tiefenrichtung erstreckende Zungen 3' ausgebildet sind. In die Schlitze ragen jeweils verlängert ausgebildete äußere Stege 4a und sind zwischen den Zungen 3' eingeklemmt, d.h. es ist eine Klemmverbindung zwischen den Kontaktblechen 3 und dem Heizelement 2 vorgesehen. Vorliegend ist jeder zweite äußere Steg 4a verlängert ausgebildet. Andere Ausgestaltungen sind jedoch möglich, bspw. kann nur jeder dritte oder nur der jeweils äußerste äußere Steg verlängert ausgebildet sein. Die am Kontaktblech 3 ausgebildeten Zungen 3' dienen als Mittel zum Halten des Heizelements 2, wobei die Zungen 3' eine Klemmverbindung bilden. In Verbindung mit der Klemmverbindung kann auch ein Klebstoff vorgesehen sein, welcher die Verbindung zusätzlich sichert.

Die Luft durchströmt den Zuheizer 1 im Bereich sämtlicher durch die Stege 4a und 4b gebildeten Öffnungen, d.h. auch die relativ kleinen Öffnungen im Bereich der Außenseiten, also die äußeren Luftkanäle 5a, auf deren Außenseite jeweils ein Kontaktblech 3 angeordnet ist, werden von Luft durchströmt und dadurch gekühlt.

Der Stromfluss erfolgt über das obere Kontaktblech 3 zu den oberen, äußeren Stegen 4a und anschließend zum Verbindungsbereich 6. In Folge des Verbindungsbereichs 6 zwischen den einzelnen Stegen 4 verteilt sich der Strom bedarfsgerecht auf sämtliche innere Stege 4b. Anschließend gelangt der Strom über den unteren Verbindungsbereich 6 zu den unteren, äußeren Stegen 4a zum unteren Kontaktblech 3.

Bei großen Stromdichten erwärmt sich das PTC-Element im entsprechenden Bereich und regelt in Folge der Erwärmung ab, so dass weniger Wärme im entsprechenden Bereich erzeugt wird. Zudem steigt der elektrische Widerstand im entsprechenden Bereich an, so dass der Strom sich einen anderen Weg sucht, sofern möglich. Besonders kritische Bereiche sind die Endbereiche der Stege 4. Da jedoch die im PTC-Element in diesem Bereich erzeugte Wärme in Folge der Luftdurchströmung durch die äußeren Luftkanäle 5a, d.h. zwischen dem Verbindungsbereich und dem Kontaktblech 3, abgeleitet und zudem über den Verbindungsbereich bei Bedarf eine Verteilung des Stroms über die gesamte Breite des PTC-Elements ermöglicht wird, kann insbesondere im zentralen Bereich des Heizelements 2 eine sehr bedarfsgerechte Wärmeerzeugung erfolgen.

Die Leistungsdichten der Fläche der einzelnen Stege 4 des PTC-Elements betragen vorliegend ca. 0,45 Watt/cm² bei einer Luftdurchströmung mit einer Luftmenge von mehr als 1 kg/min. und einer Lufteintrittstemperatur in den Zuheizer 1 von weniger als 40°C. Die Leistungsdichten bei entsprechenden Bedingungen bezogen auf das Volumen des gesamten PTC-Elements beträgt vorliegend ca. 4,0 Watt/cm³.

Der Zuheizer 1 ist gemäß dem ersten Ausführungsbeispiel in dem die Kraftfahrzeug-Klimaanlage durchströmenden Luftstrom vorliegend nach dem Heizer angeordnet, jedoch kann der Zuheizer auch an anderer Stelle in einem Luftkanal angeordnet sein, bspw. kurz vor den Ausströmern, durch welche die Luft in den Fahrzeuginnenraum ausströmt. Hierbei wird die zu erwärmende Luft sowohl durch die Öffnungen im Heizelement 2 geleitet.

An Stelle rechter Winkel im zick-zack-förmigen Verbindungsbereich, wie gemäß dem ersten Ausführungsbeispiel vorgesehen, können auch stumpfere oder spitzere Winkel vorgesehen sein. Ebenfalls kann bspw. ein wellenförmiger Verlauf des Verbindungsbereichs vorgesehen sein. Beliebige Mischformen sind möglich, ebenso Variationen des Abstands der Stege einer Reihe. Sinnvoll ist jedoch eine Anordnung der Stege zweier benachbarter Reihen auf Lücke.

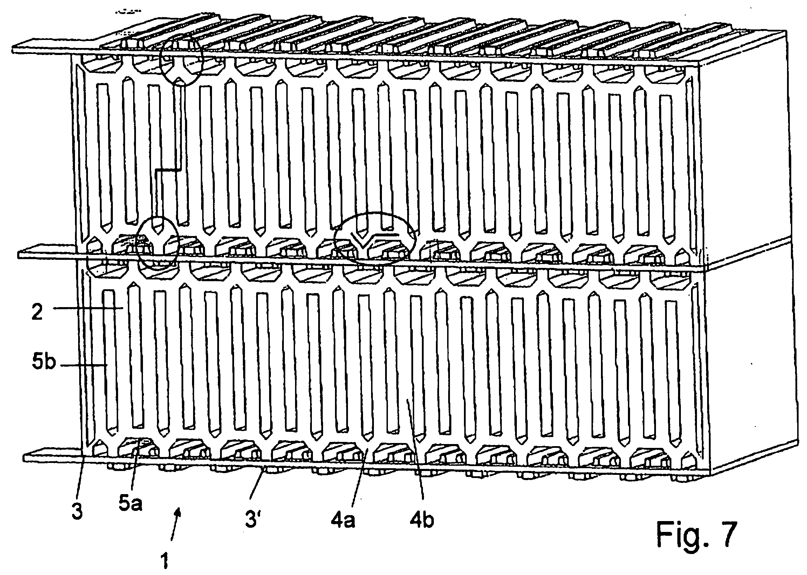

Das zweite Ausführungsbeispiel, das in Fig. 7 dargestellt ist, entspricht soweit im Folgenden nicht explizit erwähnt dem ersten Ausführungsbeispiel, so dass gleiche oder gleichwirkende Bauteile bzw. Bereiche von Bauteilen mit den gleichen Bezugszeichen wie beim ersten Ausführungsbeispiel versehen sind.

Der Zuheizer 1 gemäß dem zweiten Ausführungsbeispiel wird durch zwei Heizelemente 2 gebildet, die durch ein Kontaktblech 3 voneinander getrennt sind. Zwei weitere Kontaktbleche 3, die entsprechend dem zentralen Kontaktblech 3 ausgebildet sind, sind oben und unten, parallel zum zentralen Kontaktblech 3 angeordnet.

Die Heizelemente 2 gemäß dem zweiten Ausführungsbeispiel weisen einen ähnlichen Aufbau wie das Heizelement gemäß dem ersten Ausführungsbeispiel auf, jedoch entfallen die kurzen äußeren Stege, so dass im entsprechenden Bereich der Verbindungsbereich 6 parallel zu den Kontaktblechen 3 verläuft, wodurch der entsprechende äußere Luftkanal 5a vergrößert, insbesondere verbreitert ist. Der Verbindungsbereich 6 weist eine konstante Dicke auf, welche vorliegend derjenigen der Stege 4 entspricht. Ferner sind die äußeren Stege 4a eines Heizelements 2 auf Lücke versetzt angeordnet. In Folge dieser versetzten Anordnung sind die äußeren Stege 4a beider Heizelemente 2 im Bereich des zentralen Kontaktblechs 3 ebenfalls auf Lücke angeordnet, so dass sie abwechselnd von oben und unten durch die im Kontaktblech 3 ausgebildeten Schlitze gesteckt und von den Zungen 3' gehalten werden, d.h. die Zungen 3' dienen entsprechend den Zungen 3' des ersten Ausführungsbeispiels als Mittel zum Halten des Heizelements 2.

Die in Breitenrichtung gesehen äußersten äußeren Stege 4a sind nicht verlängert ausgebildet und enden in der gleichen Höhe wie die Absätze der dazwischen angeordneten, verlängert ausgebildeten äußeren Stege 4a, so dass sich eine Anlagefläche für das entsprechende Kontaktblech 3 ergibt. Ferner ergibt sich eine blockartige, kompakte Bauform.

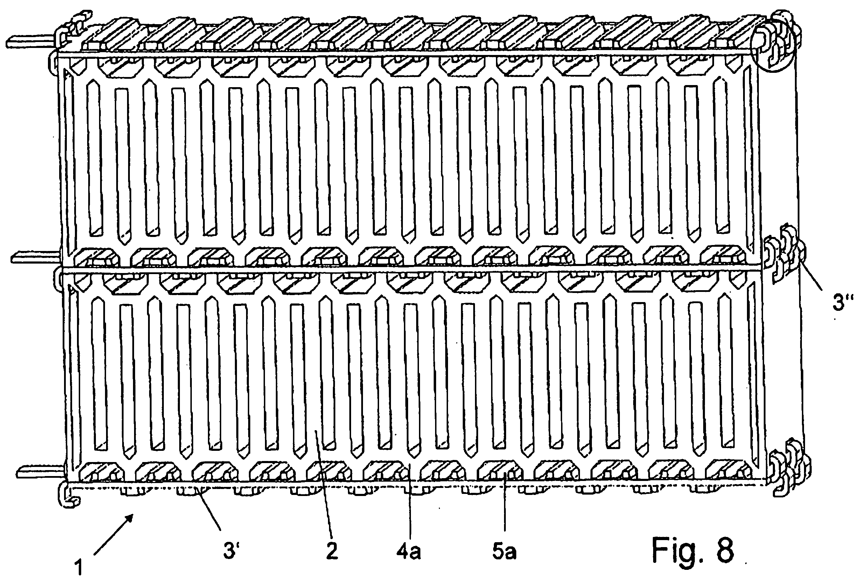

Fig. 8 zeigt eine erste Variante des zweiten Ausführungsbeispiels, wobei die Ausgestaltung der Heizelemente 2 und der Kontaktbleche - soweit im Folgenden nicht ausdrücklich erwähnt - derjenigen des ersten Ausführungsbeispiels entspricht. Gemäß der ersten Variante des zweiten Ausführungsbeispiels sind zur Sicherung der Verbindung von Kontaktblechen und Heizelementen neben den Zungen 3' am Kontaktblech 3 in Breitenrichtung an den Enden Klammern 3" dadurch ausgebildet, dass die entsprechenden Enden in Form von jeweils vier Fahnen ausgebildet sind, wobei auf einer Seite eine der inneren Fahnen als Kontaktfahne zur elektrischen Kontaktierung verwendet wird (siehe linke Seite von Fig. 8), die anderen Fahnen jedoch bügelartig um 180° umgebogen sind, abwechselnd nach oben und unten. Ferner sind in den äußersten Stegen 4 der Heizelemente rechteckförmige Öffnungen oder Vertiefungen ausgebildet, in welche die Enden der Klammern 3" eingreifen und durch den Formschluss die Bauteile zusammen halten. Somit dienen sowohl die Zungen 3' als auch die Klammern 3" als Mittel zum Halten des Heizelements 2.

Die zweite Variante des zweiten Ausführungsbeispiels entspricht der zuvor beschriebenen, ersten Variante des zweiten Ausführungsbeispiels soweit im Folgenden nicht ausdrücklich erwähnt. Im Unterschied zur ersten Variante sind an Stelle von vier Fahnen fünf Fahnen vorgesehen, wobei die Klammern nicht abwechselnd nach oben und unten gebogen, sondern die beiden äußeren Fahnen, welche die äußeren Klammern 3" bilden, und die beiden inneren Fahnen, welche die inneren Klammern 3" bilden, sind jeweils in die gleiche Richtung gebogen und die zentrale Fahne bildet die Kontaktfahne. Ferner ragen die Klammern 3" in ihrem bügelartigen Bereich weiter nach außen und ihre Enden sind in Höhe des äußersten Steges 4 des Heizelements 2 nach außen umgebogen. Gemäß dieser Variante dienen sowohl die Zungen 3' als auch die Klammern 3" als Mittel zum Halten des Heizelements 2.

Zudem sind im Unterschied zur vorigen Variante des zweiten Ausführungsbeispiels an Stelle von Öffnungen in den in Breitenrichtung äußersten Stegen 4 der Heizelemente 2 oben und unten jeweils nasenartige, in Tiefenrichtung des Heizelements 2 durchgehende Vorsprünge ausgebildet, welche auf der Seite, die benachbart zu einem Kontaktblech angeordnet ist, eine Schräge zur Erleichterung des Zusammenbaus und auf der anderen Seite eine sich senkrecht zur Seitenfläche erstreckende Fläche zum Hintergreifen aufweisen.

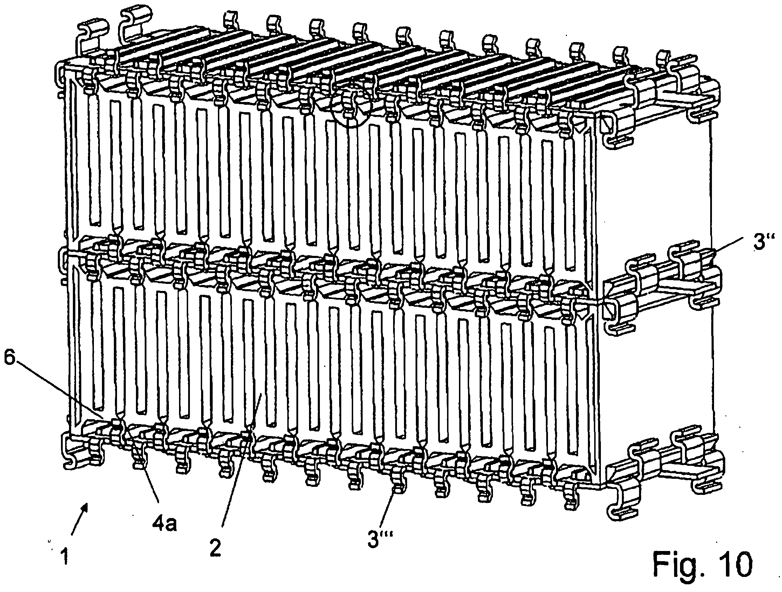

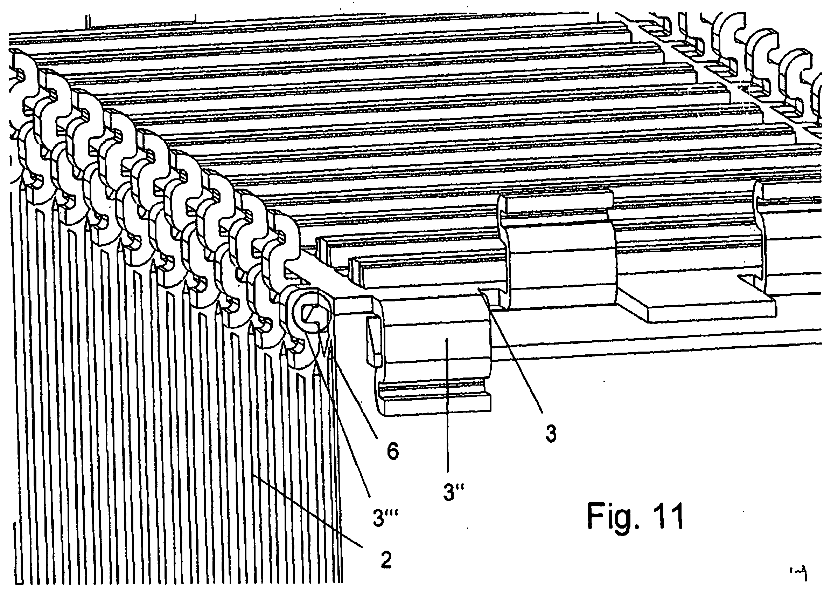

Gemäß der in den Figuren 10 und 11 dargestellten dritten Variante des zweiten Ausführungsbeispiels, welche soweit im Folgenden nicht ausdrücklich erwähnt, der zweiten Variante des zweiten Ausführungsbeispiels entspricht, sind neben den Klammern 3" an den Endseiten in Breitenrichtung des Heizelements 2 auch eine Mehrzahl von kleineren Klammern 3'" an den beiden Endseiten des Kontaktblechs 3 in Tiefenrichtung vorgesehen, wobei die kleineren Klammern 3"' jeweils im Verbindungsbereich 6 nahe einem äußeren Steg 4a an dem Heizelement 2 anliegen und dasselbe bezüglich des Kontaktblechs 3 zentrieren. Auf Grund der Anordnung der äußeren Stege 4a der beiden Heizelemente 2 auf Lücke erstrecken sich die kleineren Klammern 3'" abwechselnd nach oben und unten. Auch in diesem Fall dienen sowohl die Zungen 3' als auch die Klammern 3" als Mittel zum Halten des Heizelements 2, wobei die Haltefunktion durch die kleineren Klammern 3'" unterstützt wird.

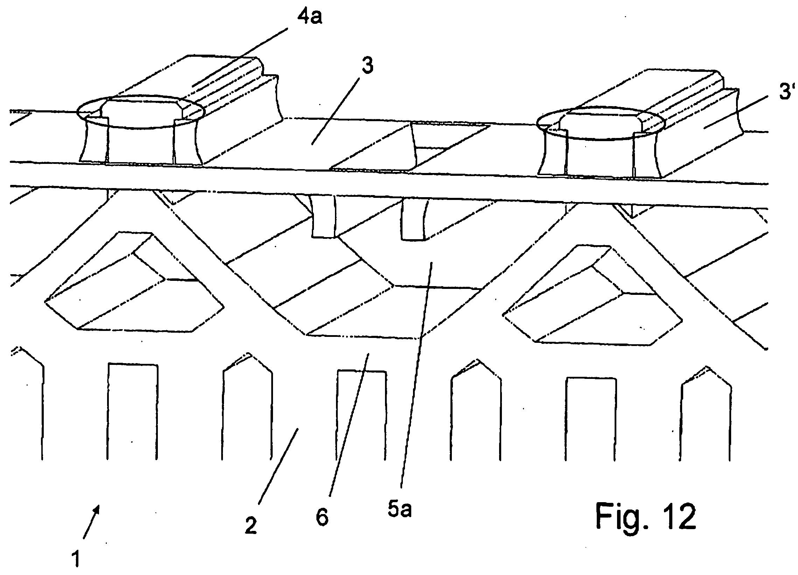

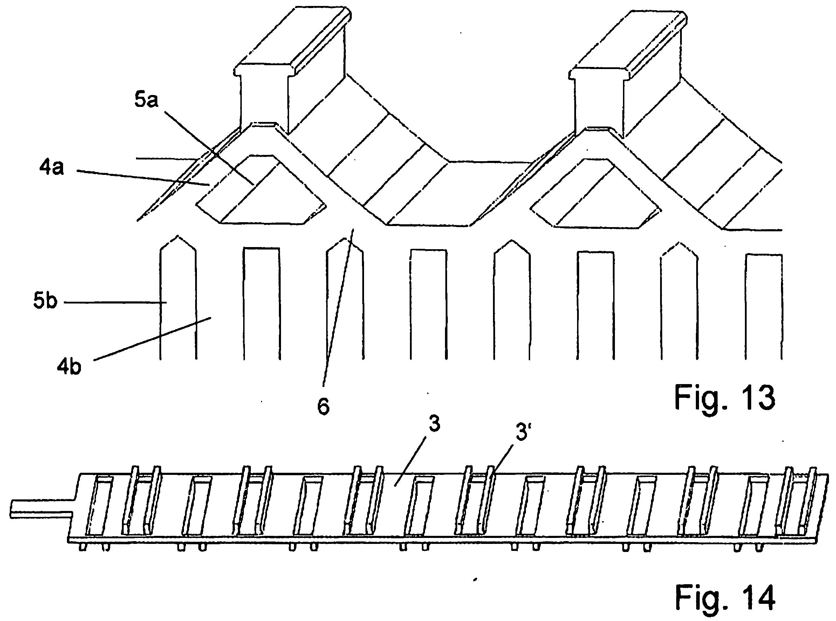

Das dritte, in den Figuren 12 bis 14 dargestellte Ausführungsbeispiel eines Zuheizers 1 entspricht im Wesentlichen dem ersten Ausführungsbeispiel, so dass gleiche oder gleichwirkende Bauteile bzw. Bereiche von Bauteilen mit den gleichen Bezugszeichen wie beim ersten Ausführungsbeispiel versehen sind.

Hierbei sind zwei Heizelemente 2 benachbart eines zentralen Kontaktblechs 3 angeordnet. Die äußeren Stege 4a der Heizelemente 2 sind vorliegend derart ausgebildet, dass die äußeren Stege 4a jeweils auf Lücke versetzt zu den inneren Stegen 4b angeordnet sind, wobei nur an jeder zweiten Stelle ein äußerer Steg 4b vorgesehen ist. Der Verbindungsbereich 6 zwischen den Stegen 4 ist in den Bereichen, in denen kein äußerer Steg vorgesehen ist, eben ausgebildet, d.h. parallel zu den Kontaktblechen 3 verlaufend. In den anderen Bereichen, d.h. in Verlängerung eines äußeren Stegs 4a ist der Verbindungsbereich 6 V-förmig nach außen gezogen.

Ferner sind zwei benachbarte äußere Stege 4a V-förmig zusammengeführt und enden in einem Fortsatz nach außen, d.h. die beiden Stege samt Fortsatz haben eine Y-förmige Gestalt. Die Funktion des Fortsatzes ist die selbe wie die des äußeren Bereich der zuvor beschriebenen verlängerten äußeren Stege, nämlich er ist in einen Schlitz im Kontaktblech 3 eingeführt und wird von Zungen 3' gehalten.

Auf Grund des Zusammenführens jeweils zweier äußerer Stege 4a sind zwei unterschiedliche Luftkanalausgestaltungen der äußeren Luftkanäle 5a vorgesehen, nämlich eine etwa dreieckförmige und eine etwa trapezförmige Ausgestaltung, wobei vorliegend nur die trapezförmigen äußeren Luftkanäle 5a zwischen den einzelnen Kontaktbereichen von Heizelement 2 und Kontaktblech 3 liegen. Zur Sicherung der Verbindung von Kontaktblech und Heizelement sind jeweils die Enden der verlängerten, äußeren Stege 4a verbreitert ausgebildet, so dass ein Hinterschnitt zu den Zungen 3' vorgesehen ist und dadurch das Heizelement 2 an dem Kontaktblech 3 gehalten wird.

Die Funktion der Zungen kann durch endseitig an den Kontaktblechen angebrachte Klammern unterstützt werden, welche beispielsweise einen am Heizelement ausgebildeten, nasenförmigen Vorsprung hintergreifen und dadurch das Heizelement festhalten, oder in eine entsprechende Öffnung im Heizelement eingreifen.

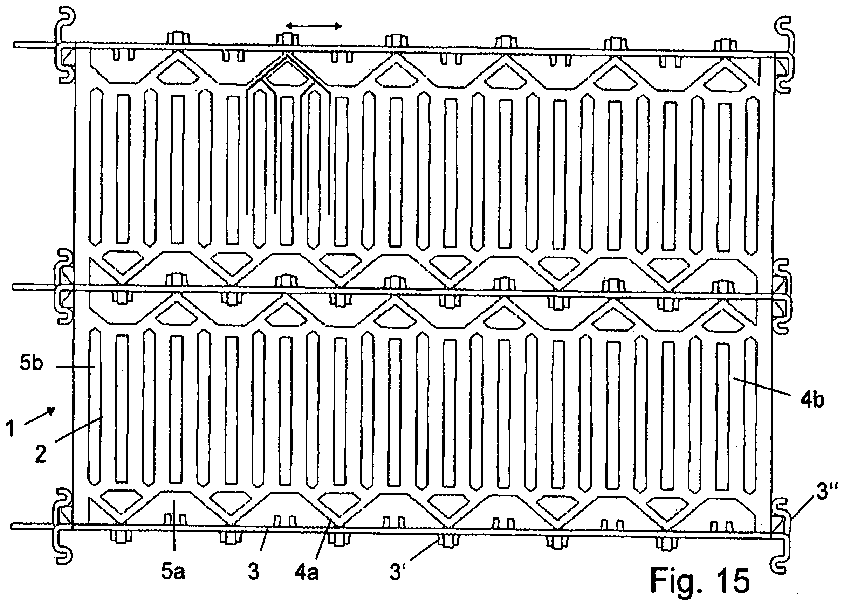

Gemäß dem vierten, in Fig. 15 dargestellten Ausführungsbeispiel sind die Heizelemente 2 und die Kontaktbleche 3 abgesehen von den fehlenden Verbreiterungen an den Enden der verlängerten und zusammengeführten, äußeren Stegen 4a, den Nasen an den Außenseiten der Heizelemente 2 und den die Nasen hintergreifenden Klammern 3" an den in Breitenrichtung äußeren Seiten der Kontaktbleche entsprechendem zuvor beschriebenen Ausführungsbeispiel ausgebildet.

Wie bei den zuvor beschriebenen Ausführungsbeispielen sind - sofern Zungen am Kontaktblech ausgebildet sind - benachbarte Zungenpaare in unterschiedliche Richtungen bezüglich der Kontaktblechflächen gebogen, um von beiden Seiten her Heizelemente aufnehmen und kontaktieren zu können, so dass nur eine Bauart für die Kontaktbleche erforderlich ist.

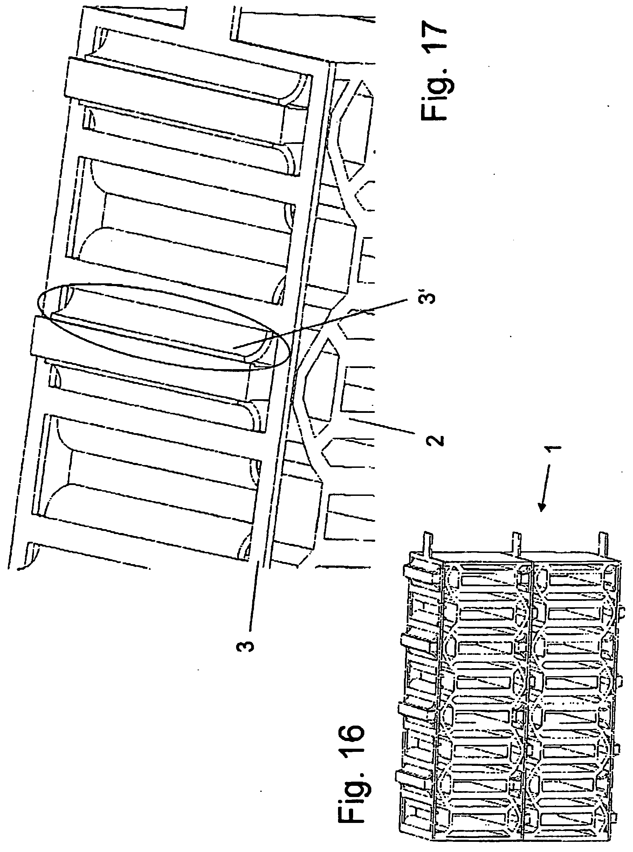

Die Figuren 16 und 17 zeigen das fünfte Ausführungsbeispiel eines elektrischen Zuheizers 1. Hierbei entspricht die Ausgestaltung des Heizelements 2 derjenigen des dritten Ausführungsbeispiels, d.h. die Enden der verlängerten und zusammengeführten, äußeren Stegen 4a sind verbreitert ausgebildet, so dass die Enden der Zungen 3' des entsprechenden Kontaktblechs 3 an der Innenkante anliegen können und so das Kontaktblech 3 und das Heizelement 2 sicher zusammengehalten werden können. Im Unterschied zum dritten Ausführungsbeispiel sind die Zungen 3' in einem relativ großen Radius gebogen, der bis zum Ende der entsprechenden Zunge 3' reicht. Hierdurch ist die Breite der Stege zwischen den einzelnen Zungenpaaren verringert.

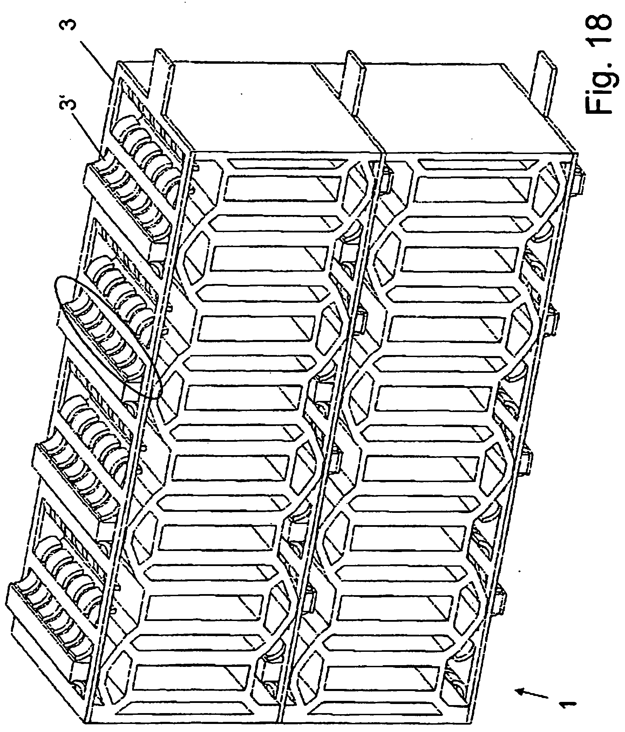

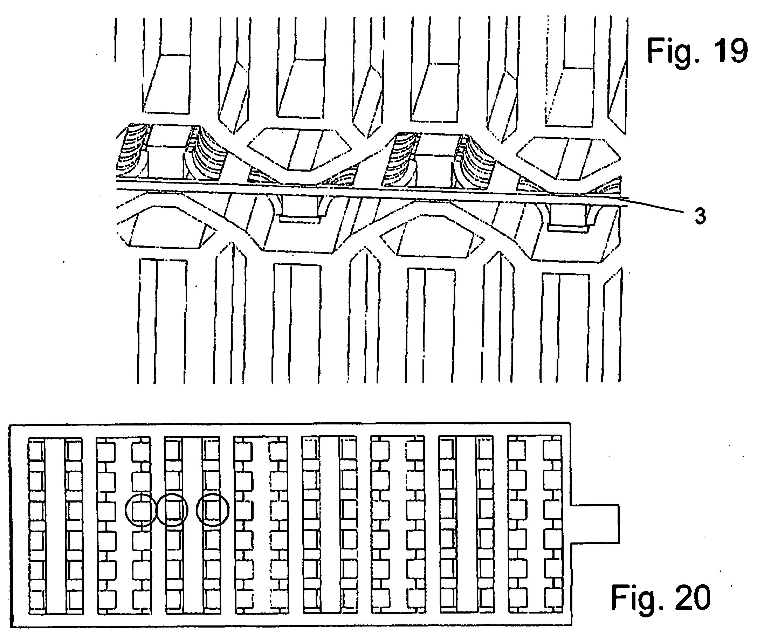

Gemäß dem sechsten, in den Figuren 18 bis 20 dargestellten Ausführungsbeispiel ist - im Unterschied zum zuvor beschriebenen Ausführungsbeispiel - in Tiefenrichtung des Zuheizers 1 gesehen, eine Mehrzahl von einzelnen, voneinander beabstandeten Zungen 3' ausgebildet Hierbei sind in Tiefenrichtung sechs Reihen und in Breitenrichtung acht Reihen von Zungen 3' vorgesehen. In Breitenrichtung benachbarte Zungenreihenpaare sind in unterschiedliche Richtungen bezüglich der Kontaktblechflächen gebogen. Das Material zwischen in Tiefenrichtung benachbarten Zungen 3' ist entfernt, so dass etwas Material und somit Gewicht eingespart werden kann.

Auch in diesem Fall sind die Enden der äußeren Stege 4a verbreitert ausgebildet, wobei die verbreiterte Ausgestaltung vorliegend - auch wenn in Bezug auf die Funktion nicht erforderlich - durchgehen ausgebildet ist.

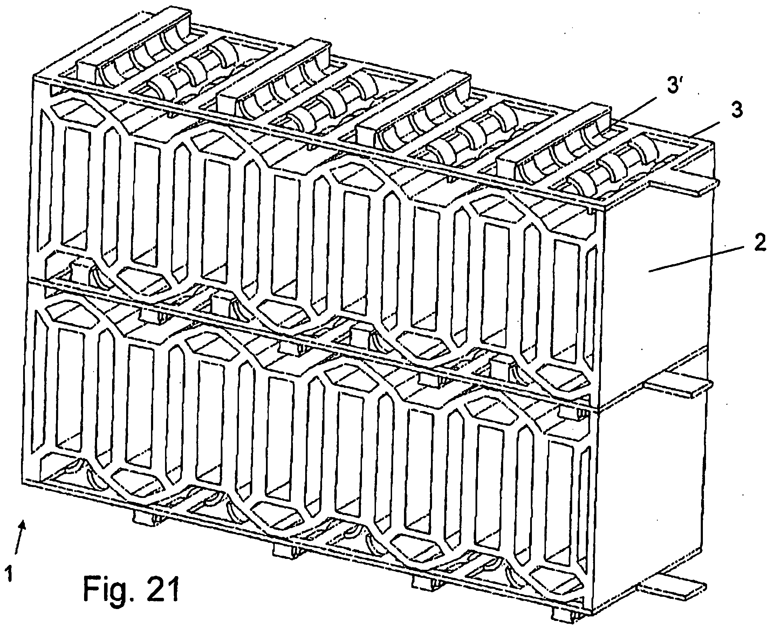

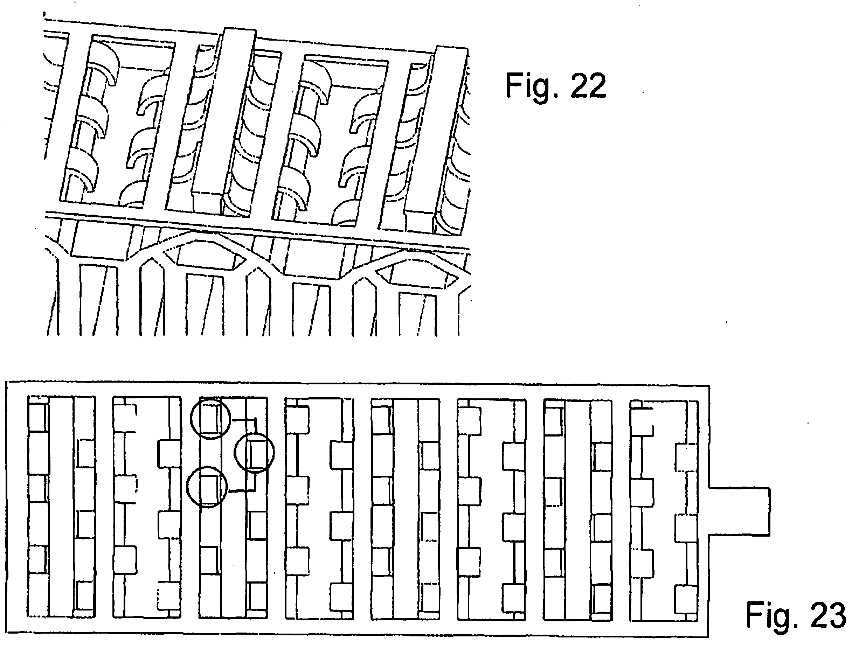

Gemäß einer ersten Variante, die in Figuren 21 bis 23 dargestellt ist, sind die einzelnen Zungen 3' jeweils versetzt auf Lücke angeordnet, so dass an einem verlängert ausgebildeten und zusammengeführten äußeren Steg 4a in Tiefenrichtung abwechselnd von rechts und links her Zungenenden des Kontaktblechs anliegen.

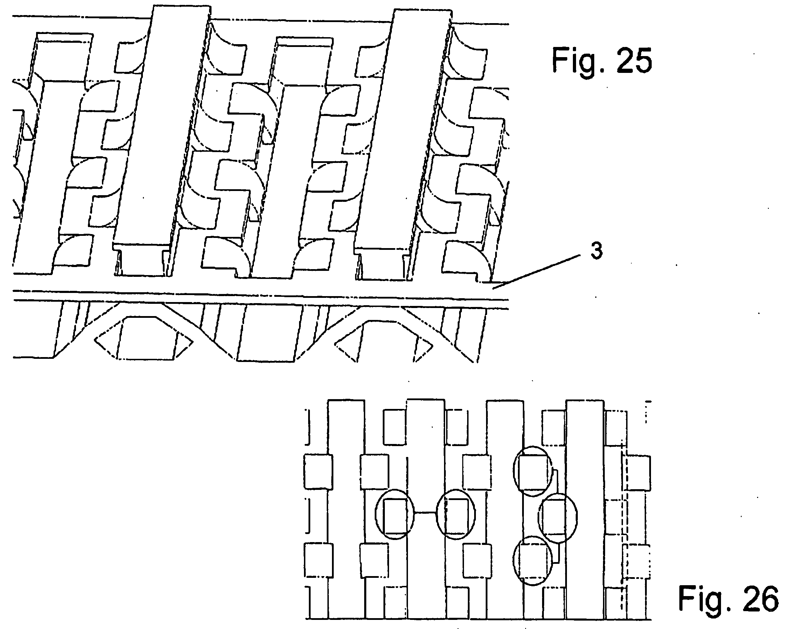

Gemäß der zweiten Variante, die in den Figuren 25 und 26 dargestellt ist, ist die Stegbreite des Kontaktblechstegs von dem aus die einzelnen Zungen ausgehen derart verringert, dass die durchgehende Materialpartie mäanderförmig verläuft.

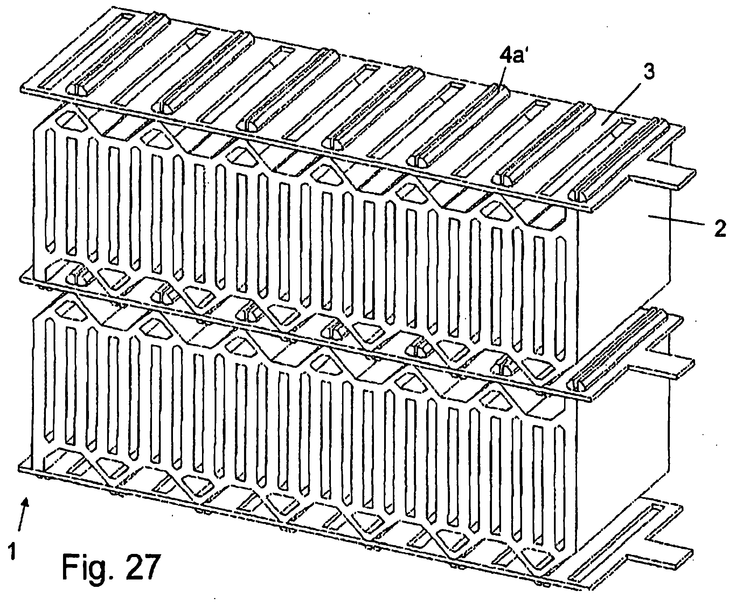

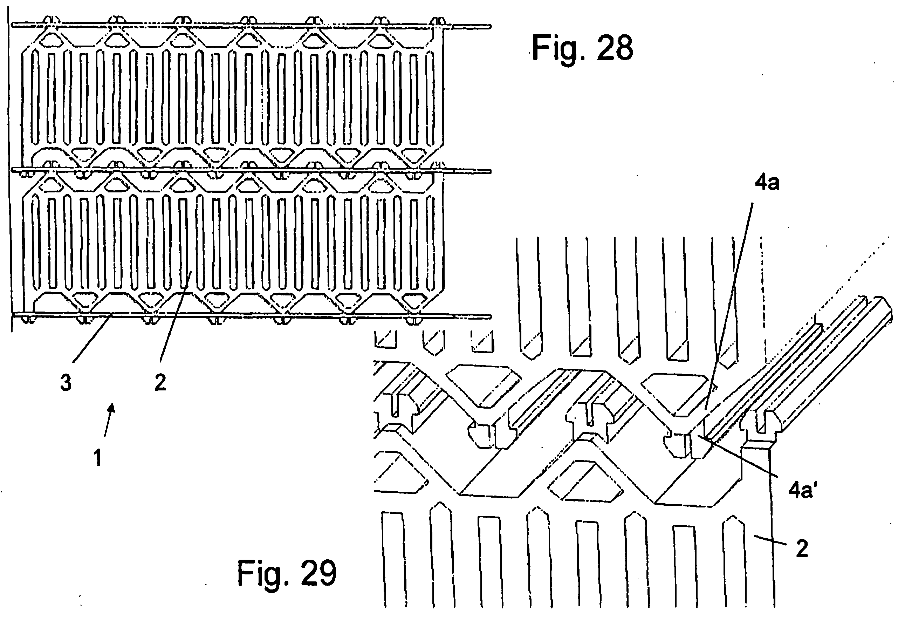

In den Figuren 27 bis 29 ist das siebte Ausführungsbeispiel eines Zuheizers 1 dargestellt, bei welchem der prinzipielle Aufbau des Heizelements 2 im Heizbereich demjenigen des zuvor beschriebenen Ausführungsbeispiels entspricht. Im Unterschied hierzu ist jeweils das Ende des zusammengeführten, verlängert ausgebildeten äußeren Stegs 4a mit zwei federarmartig ausgebildeten, in Tiefenrichtung parallel zueinander und beabstandet voneinander verlaufenden Bereichen 4a' ausgebildet, wobei auf den voneinander wegzeigenden Seiten jeweils ein nasenartig vorstehender Bereich vorgesehen ist, der über die Seitenfläche des Stegs vorsteht und einen Hinterschnitt zum Halten des entsprechenden Kontaktblechs 3 bildet. Die Kontaktbleche 3 weisen im Unterschied zum vorigen Ausführungsbeispiel keine Zungen sondern nur in Tiefenrichtung verlaufende langgestreckt rechteckförmige Schlitze auf, durch welche die Enden der äußeren Stege 4a ragen. Somit sind in diesem Fall die Mittel zum Halten des Kontaktblechs am Heizelement ausgebildet.

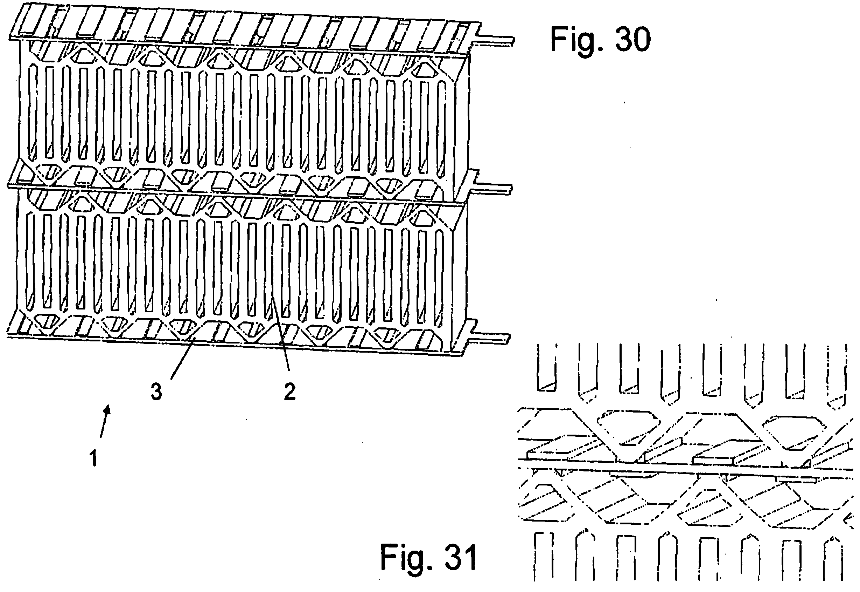

Gemäß dem achten, in Figuren 30 und 31 dargestellten Ausführungsbeispiel ist das Kontaktblech 3 bereichsweise mit dem Material des Heizelements 2 umspritzt, so dass sich eine Hinterschneidung bildet, welche das Kontaktblech 3 am Heizelement 2 hält und sichert. Hierbei sind im Kontaktblech 3 - entsprechend dem vorigen Ausführungsbeispiel - rechteckförmige, sich in Tiefenrichtung erstreckende Schlitze ausgebildet, die vom Material des Heizelements 2 durchdrungen sind. Auch in diesem Fall können von beiden Seiten her Heizelemente 2 an einem Kontaktblech 3 angespritzt werden.

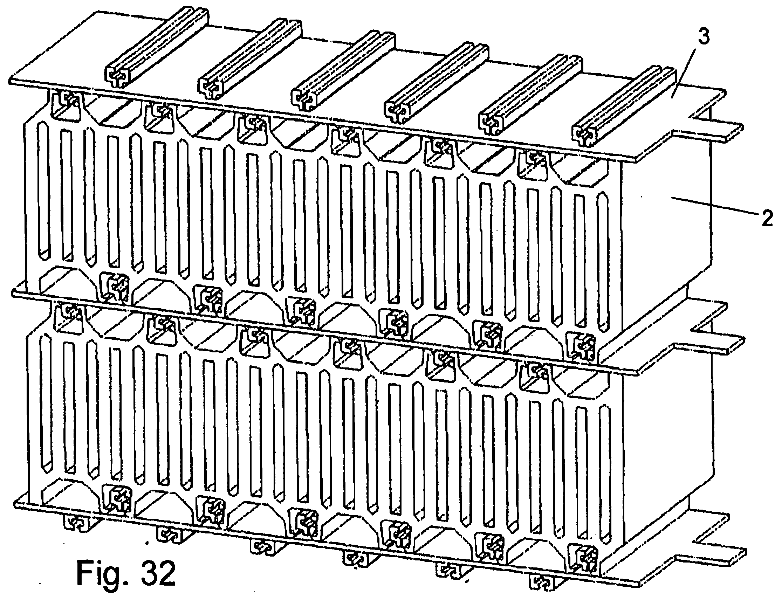

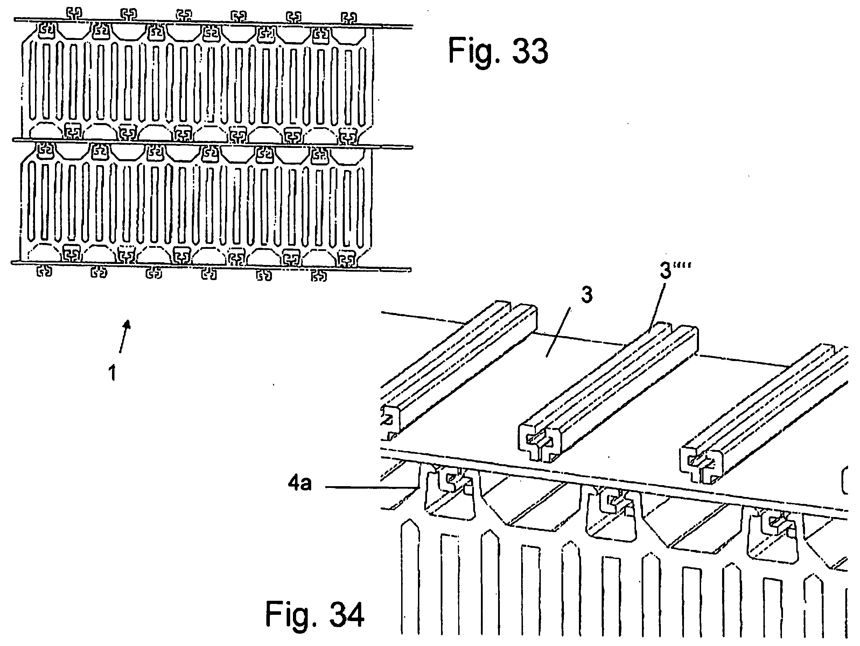

Gemäß dem neunten, in den Figuren 32 bis 34 dargestellten Ausführungsbeispiel sind am Kontaktblech 3 Federarme 3"" angebracht, vorliegend angelötet, alternativ bspw. angenietet oder angeschweißt. Diese Federarme 3"" sind vorliegend durch zwei U-förmig nach außen gebogene Schenkel gebildet. Ferner sind die äußeren Arme 4a des Heizelements 2 an ihren Enden mit nasenartigen Bereichen ausgebildet, welche die Federarme 3"" des Kontaktblechs 3 hintergreifen, so dass das Kontaktblech 3 am entsprechenden Heizelement 2 gehalten wird.

Prinzipiell ist auch eine derartige Ausgestaltung möglich, dass sowohl die Federarme als auch die äußeren Arme während des Zusammenbaus elastisch verformt werden und nach erfolgtem Zusammenführen in ihre Ausgangsposition oder eine Position nahe der Ausgangsposition, in welcher eine leichte Vorspannung herrscht, zurückfedern.

Um die Stromeinleitung und -ausleitung zu verbessern, können auf Bereichen der Oberfläche des Heizelements elektrisch leitende Beschichtungen vorgesehen sein.

## Patentansprüche

1. Elektrischer Heizer oder Zuheizer, insbesondere für eine Heizungs- oder Klimaanlage eines Kraftfahrzeugs, mit mindestens einem durch ein PTC-Element gebildeten Heizelement (2), welches der Erwärmung eines durch mindestens einen im Heizelement (2) ausgebildeten Luftkanal (5) strömenden Mediums dient, und das PTC-Element zur Stromein- bzw. -ausleitung an zwei einander gegenüberliegenden Randbereichen, die senkrecht oder im Wesentlichen senkrecht zur Strömungsrichtung des Mediums angeordnet sind, über Kontaktbleche (3) elektrisch kontaktiert ist, wobei das Heizelement (2) zwischen zwei Kontaktblechen (3) angeordnet ist, wobei am Kontaktblech (3) Mittel zum Halten des Heizelements (2) und/oder am Heizelement (2) Mittel zum Halten des Kontaktblechs (3) ausgebildet sind, **dadurch gekennzeichnet, dass,** die Mittel zum Halten des Heizelements (2) durch federnde Zungen (3') gebildet sind, die auf mindestens einer Seite an einem durch eine Öffnung im Kontaktblech (3) ragenden äußeren Steg (4a) des Heizelements (2) anliegen.

2. Elektrischer Heizer oder Zuheizer nach Anspruch 1, **dadurch gekennzeichnet, dass** beidseitig der Öffnung federnde Zungen (3') ausgebildet sind.

3. Elektrischer Heizer oder Zuheizer nach einem der vorhergehenden Ansprüche, **dadurch gekennzeichnet, dass** die Mittel zum Halten des Heizelements (2) durch an dem Kontaktblech (3) ausgebildete Klammern (3" und/oder 3"') gebildet sind, die seitlich des Heizelements (2) enden.

4. Elektrischer Heizer oder Zuheizer nach Anspruch 3, **dadurch gekennzeichnet, dass** die Klammern (3") das Heizelement (2) in mindestens einem Bereich hintergreifen.

5. Elektrischer Heizer oder Zuheizer nach Anspruch 3 oder 4, **dadurch gekennzeichnet, dass** im Heizelement (2) mindestens eine Öffnung oder Vertiefung für einen Eingriff einer Klammer (3") ausgebildet und/oder am Heizelement (2) mindestens ein Vorsprung zum Hintergreifen mit mindestens einer Klammer (3") vorgesehen ist.

6. Elektrischer Heizer oder Zuheizer nach Anspruch 3, **dadurch gekennzeichnet, dass** die Klammern (3" und/oder 3'") das Heizelement (2) in Breiten- und/oder Tiefenrichtung des Heizelements (2) am Kontaktblech (3) positionieren und zentrieren.

7. Elektrischer Heizer oder Zuheizer nach einem der vorhergehenden Ansprüche, **dadurch gekennzeichnet, dass** das Heizelement (2) mindestens drei Reihen von Stegen (4) aufweist, welche durch Verbindungsbereiche (6) voneinander getrennt sind.

8. Elektrischer Heizer oder Zuheizer nach Anspruch 7, **dadurch gekennzeichnet, dass** das Heizelement (2) genau drei Reihen von Stegen (4) aufweist, welche durch zwei Verbindungsbereiche (6) voneinander getrennt sind.

9. Elektrischer Heizer oder Zuheizer nach einem der vorhergehenden Ansprüche, **dadurch gekennzeichnet, dass** zwischen dem Heizelement (2) und dem Kontaktblech (3) äußere Luftkanäle (5a) ausgebildet sind, welche durch äußere Stege (4a) des Heizelements (2) voneinander getrennt sind.

10. Elektrischer Heizer oder Zuheizer nach Anspruch 9, **dadurch gekennzeichnet, dass** die äußeren Stege (4a) in Tiefenrichtung durchgehend ausgebildet sind.

11. Elektrischer Heizer oder Zuheizer nach Anspruch 7 oder 8, **dadurch gekennzeichnet, dass** der Verbindungsbereich (6) zick-zack-förmig oder wellenförmig ausgebildet ist, wobei auf jedem Berg oder unter jedem Tal jeweils ein Steg (4) vorgesehen ist.

12. Elektrischer Heizer oder Zuheizer nach einem der vorhergehenden Ansprüche, **dadurch gekennzeichnet, dass** mindestens zwei Heizelemente (2) vorgesehen sind, zwischen den Heizelementen (2) ein Kontaktblech (3) angeordnet ist, und auf beiden Seiten des Kontaktblechs (3) äußere Luftkanäle (5a), getrennt voneinander durch Stege (4), vorgesehen sind.

13. Elektrischer Heizer oder Zuheizer nach einem der vorhergehenden Ansprüche, **dadurch gekennzeichnet, dass** das Heizelement (2) aus einem Polymer, insbesondere einem Polyolefin, mit elektrisch leitenden Füllmaterialien, insbesondere mit Kohlenstoff, insbesondere in Form von Rußpartikeln, besteht.

14. Elektrischer Heizer oder Zuheizer nach einem der vorhergehenden Ansprüche, **dadurch gekennzeichnet, dass** das Mittel zum Halten des Heizelements (2) und/oder das Mittel zum Halten des Kontaktblechs (3) einen elastisch verformbaren Bereich aufweist, welcher während des Zusammenbaus von Heizelement (2) und Kontaktblech (3) kurzfristig elastisch verformt wird, bevor er seine Endposition erreicht, in welcher er einen Bereich des Bauteils hintergreift.

15. Elektrischer Heizer oder Zuheizer nach Anspruch 14, **dadurch gekennzeichnet, dass** der elastische Bereich am Heizelement (2) ausgebildet ist.

16. Kraftfahrzeug-Heiz- oder -Klimaanlage **gekennzeichnet durch** mindestens einen elektrischen Heizer oder Zuheizer (1) gemäß einem der vorstehenden Ansprüche.

## Claims

1. An electric heater or auxiliary heater, in particular for a heating system or an air-conditioner of a vehicle, having at least one heating element (2) formed by a PTC element which serves to heat a medium flowing through at least one air duct (5) formed in the heating element (2), wherein the PTC element is in electrical contact via contact plates (3) in two opposing edge areas arranged perpendicular or substantially perpendicular to the flow direction of the medium in order to introduce or remove power, wherein the heating element (2) is arranged between two contact plates (3), wherein means for holding the heating element (2) are formed on the contact plate (3) and/or means for holding the contact plate (3) are formed on the heating element (2), **characterised in that** the means for holding the heating element (2) are formed by resilient tongues (3') which lie against an outer web (4a) of the heating element (2) projecting through an opening in the contact plate (3) on at least one side.

2. The electric heater or auxiliary heater according to claim 1, **characterised in that** resilient tongues (3') are formed on both sides of the opening.

3. The electric heater or auxiliary heater according to one of the preceding claims, **characterised in that** the means for holding the heating element (2) are formed by brackets (3" and/or 3"') formed on the contact plate (3) and ending laterally to the heating element (2).

4. The electric heater or auxiliary heater according to claim 3, **characterised in that** the brackets (3") of the heating element (2) engage behind in at least one area.

5. The electric heater or auxiliary heater according to claim 3 or 4, **characterised in that** at least one aperture or recess is formed in the heating element (2) for the engagement of a bracket (3") and/or at least one recess is provided on the heating element (2) for engaging behind with at least one bracket (3").

6. The electric heater or auxiliary heater according to claim 3, **characterised in that** the brackets (3" and/or 3"') position and centre the heating element (2) on the contact plate (3) in the width and/or depth direction of the heating element (2).

7. The electric heater or auxiliary heater according to one of the preceding claims, **characterised in that** the heating element (2) has at least three rows of webs (4) which are separated from one another by connection areas (6).

8. The electric heater or auxiliary heater according to claim 7, **characterised in that** the heating element (2) has exactly three rows of webs (4) which are separated from one another by two connection areas (6).

9. The electric heater or auxiliary heater according to one of the preceding claims, **characterised in that** outer air ducts (5a) are formed between the heating element (2) and the contact plate (3) which are separated from one another by outer webs (4a) of the heating element (2).

10. The electric heater or auxiliary heater according to claim 9, **characterised in that** the outer webs (4a) are continuously formed in the depth direction.

11. The electric heater or auxiliary heater according to claim 7 or 8, **characterised in that** the connection area (6) is formed in a zigzag shape or wavelike shape, wherein one web (4) each is provided on every hill or below every valley.

12. The electric heater or auxiliary heater according to one of the preceding claims, **characterised in that** at least two heating elements (2) are provided, a contact plate (3) is arranged between the heating elements (2) and outer air ducts (5a), separated from one another by webs (4), are provided on both sides of the contact plate (3).

13. The electric heater or auxiliary heater according to one of the preceding claims, **characterised in that** the heating element (2) consists of a polymer, in particular a polyolefin, with electrically conductive filling materials, in particular with carbon, in particular in the form of soot particles.

14. The electric heater or auxiliary heater according to one of the preceding claims, **characterised in that** means for holding the heating element (2) and/or the means for holding the contact plate (3) have an elastically deformable area which is temporarily elastically deformed during the assembly of the heating element (2) and the contact sheet (3) before reaching its final position in which it engages behind an area of the component.

15. The electric heater or auxiliary heater according to claim 14, **characterised in that** the elastic area is formed on the heating element (2).

16. A heating system or an air-conditioner for a vehicle, **characterised by** at least one electric heater or auxiliary heater (1) according to one of the preceding claims.

## Revendications

1. Dispositif de chauffage ou dispositif de chauffage auxiliaire électrique, en particulier pour un système de chauffage ou de climatisation d'un véhicule automobile, comprenant au moins un élément chauffant (2) formé par un élément à coefficient de température positif - CTP -, élément chauffant qui sert au chauffage d'un milieu en circulation dans au moins un conduit d'air (5) formé dans l'élément chauffant (2), et l'élément CTP prévu pour l'entrée ou la sortie de courant au niveau de deux zones de bordure opposées l'une par rapport à l'autre, qui sont disposées perpendiculairement ou pratiquement de façon perpendiculaire à la direction d'écoulement du milieu, est mis en contact électrique par des tôles de contact (3), où l'élément chauffant (2) est disposé entre deux tôles de contact (3), où des moyens sont configurés, sur la tôle de contact (3), pour le maintien de l'élément chauffant (2) et / ou des moyens sont configurés, sur l'élément chauffant (2), pour le maintien de la tôle de contact (3), **caractérisé en ce que** les moyens servant au maintien de l'élément chauffant (2) sont formés par des languettes élastiques (3') qui, sur au moins un côté, sont en appui sur une barrette extérieure (4a) de l'élément chauffant (2), ladite barrette pénétrant dans la tôle de contact (3) à travers une ouverture.

2. Dispositif de chauffage ou dispositif de chauffage auxiliaire électrique selon la revendication 1, **caractérisé en ce que** des languettes élastiques (3') sont configurées des deux côtés de l'ouverture.

3. Dispositif de chauffage ou dispositif de chauffage auxiliaire électrique selon l'une quelconque des revendications précédentes, **caractérisé en ce que** les moyens servant au maintien de l'élément chauffant (2) sont formés par des crochets de fixation (3" et / ou 3"') configurés sur la tôle de contact (3), crochets de fixation qui se terminent latéralement par rapport à l'élément chauffant (2).

4. Dispositif de chauffage ou dispositif de chauffage auxiliaire électrique selon la revendication 3, **caractérisé en ce que** les crochets de fixation (3") s'engagent dans l'élément chauffant (2), par l'arrière, dans au moins une zone.

5. Dispositif de chauffage ou dispositif de chauffage auxiliaire électrique selon la revendication 3 ou 4, **caractérisé en ce qu'**au moins une ouverture ou cavité est configurée, dans l'élément chauffant (2), pour un engagement d'un crochet de fixation (3"), et / ou il est prévu, sur l'élément chauffant (2), au moins une partie saillante servant à s'engager, par l'arrière, avec au moins un crochet de fixation (3").

6. Dispositif de chauffage ou dispositif de chauffage auxiliaire électrique selon la revendication 3, **caractérisé en ce que** les crochets de fixation (3" et / ou 3"') positionnent et centrent l'élément chauffant (2), sur la tôle de contact (3), dans la direction de largeur et / ou de profondeur de l'élément chauffant (2).

7. Dispositif de chauffage ou dispositif de chauffage auxiliaire électrique selon l'une quelconque des revendications précédentes, **caractérisé en ce que** l'élément chauffant (2) présente au moins trois rangées de barrettes (4) qui sont séparées les unes des autres par des zones de liaison (6).

8. Dispositif de chauffage ou dispositif de chauffage auxiliaire électrique selon la revendication 7, **caractérisé en ce que** l'élément chauffant (2) présente exactement trois rangées de barrettes (4) qui sont séparées les unes des autres par deux zones de liaison (6).

9. Dispositif de chauffage ou dispositif de chauffage auxiliaire électrique selon l'une quelconque des revendications précédentes, **caractérisé en ce que** des conduits d'air extérieurs (5a) sont configurés entre l'élément chauffant (2) et la tôle de contact (3), conduits d'air qui sont séparés les uns des autres par des barrettes extérieures (4a) de l'élément chauffant (2).

10. Dispositif de chauffage ou dispositif de chauffage auxiliaire électrique selon la revendication 9, **caractérisé en ce que** les barrettes extérieures (4a) sont configurées de façon continue dans la direction de profondeur.

11. Dispositif de chauffage ou dispositif de chauffage auxiliaire électrique selon la revendication 7 ou 8, **caractérisé en ce que** la zone de liaison (6) est configurée en forme de zigzags ou en ayant une forme ondulée, où il est prévu à chaque fois une barrette (4) placée sur chaque partie en saillie ou sous chaque partie en creux.

12. Dispositif de chauffage ou dispositif de chauffage auxiliaire électrique selon l'une quelconque des revendications précédentes, **caractérisé en ce qu'**il est prévu au moins deux éléments chauffants (2), une tôle de contact (3) étant disposée entre les éléments chauffants (2), et il est prévu, des deux côtés de la tôle de contact (3), des conduits d'air extérieurs (5a) séparés les uns des autres par des barrettes (4).

13. Dispositif de chauffage ou dispositif de chauffage auxiliaire électrique selon l'une quelconque des revendications précédentes, **caractérisé en ce que** l'élément chauffant (2) se compose d'un polymère, en particulier d'une polyoléfine comprenant des matières de charge électroconductrices, comprenant en particulier du carbone, en particulier sous forme de particules de suie.

14. Dispositif de chauffage ou dispositif de chauffage auxiliaire électrique selon l'une quelconque des revendications précédentes, **caractérisé en ce que** le moyen servant au maintien de l'élément chauffant (2) et / ou le moyen servant au maintien de la tôle de contact (3) présente une zone élastiquement déformable qui, au cours de l'assemblage de l'élément chauffant (2) et de la tôle de contact (3), est déformée élastiquement pendant un court laps de temps, avant que ladite zone atteigne sa position définitive dans laquelle elle s'engage, par l'arrière, dans une zone du composant.

15. Dispositif de chauffage ou dispositif de chauffage auxiliaire électrique selon la revendication 14, **caractérisé en ce que** la zone élastique est configurée sur l'élément chauffant (2).

16. Système de chauffage ou de climatisation d'un véhicule automobile **caractérisé par** au moins un dispositif de chauffage ou dispositif de chauffage auxiliaire électrique (1) selon l'une quelconque des revendications précédentes.
